# EUROPEAN PATENT APPLICATION

(11) **EP 4 832 527 A1**
(43) Date of publication of application: **28.10.2026**
(21) Application number: 24905356.2
(22) Date of filing: 09.04.2024
(51) Int. Cl.: H04W 8/24

(54) **ELECTRONIC DEVICE FOR FEDERATED LEARNING SERVER, AND ELECTRONIC DEVICE FOR CORE NETWORK**

(30) Priority: 20.12.2023 CN 202311763059
(71) Applicant: Sony Group Corporation, Tokyo 108-0075 (JP)
(72) Inventor: SUN, Chen, Beijing 100027 (CN); LU, Yunlong, Beijing 100044 (CN); XU, Yanrong, Beijing 100044 (CN); LIU, Jiajia, Beijing 100044 (CN); ZHANG, Wenqi, Beijing 100027 (CN)
(74) Representative: D Young & Co LLP
(86) International application number: PCT/CN2024/086762
(87) International publication number: WO 2025/129856

(57) **Abstract**

An electronic device for a federated learning server, and an electronic device for a core network The electronic device for a federated learning server comprises at least one processor and at least one memory, wherein the at least one memory comprises a computer program code, and the at least one memory and the computer program code are configured to enable, by means of the at least one processor, the electronic device to: send to a core network order-of-magnitude information of the order of magnitude of a parameter of a global model for federated learning, so as to assist the core network in identifying from among a plurality of federated learning clients a federated learning client, which cannot upload all of the parameters of a local model of the federated learning client, as a partial upload client, and aggregate, when a preset condition is met, some of the parameters of the local model that are received from the partial upload client, so as to obtain the global model in the current round of training of federated learning (FIG. 2).

## Description

This application claims priority to Chinese Patent Application No. 202311763059.1 titled "ELECTRONIC DEVICE FOR FEDERATED LEARNING SERVER, AND ELECTRONIC DEVICE FOR CORE NETWORK", filed on December 20, 2023 with the China National Intellectual Property Administration, which is incorporated herein by reference in its entirety.

### FIELD

The present disclosure relates to the technical field of wireless communication, and in particular to an electronic apparatus for a federated learning server, an electronic apparatus for a core network, and an electronic apparatus for a federated learning client. More specifically, the present disclosure relates to an electronic apparatus for a federated learning server and an electronic apparatus for a core network and an electronic apparatus for a federated learning client which are based on federated learning of partial parameters of local models.

### BACKGROUND

With the continuous growth of terminal intelligent services, higher requirements for wireless networks to support intelligent models are proposed. Generally, user equipments (UEs) have different datasets and are unwilling to share the datasets with others in consideration of information privacy or other issues, causing data barrier problems. In addition, a unique dataset of a UE often has a small size, making it difficult to support training of a machine learning (ML) model with high accuracy and strong generalization. In view of this, in federated learning (FL), FL clients (for example, UE) train local models locally, a FL server aggregates local models of multiple FL clients into a global model and distributes the global model to the FL clients. Such training mode overcomes the data barrier problem between UEs and can obtain a ML model with high accuracy and strong generalization.

### SUMMARY

A brief summary of the present disclosure is given below, to provide a basic understanding of some aspects of the present disclosure. It should be understood that the following summary is not an exhaustive summary of the present disclosure. It is not intended to determine a key or important part of the present disclosure, nor does it intend to limit the scope of the present disclosure. The purpose is merely to present some concepts in a simplified form, as a preamble to a more detailed description discussed later.

According to an aspect of the present disclosure, an electronic apparatus for a federated learning server is provided. The electronic apparatus includes at least one processor and at least one memory including computer program code, where the at least one memory and the computer program code are configured to cause, through the at least one processor, the electronic apparatus to execute: sending magnitude information on parameter magnitude of a global model used for federated learning to a core network, to assist the core network in identifying, from among a plurality of federated learning clients, federated learning client(s) that cannot upload all parameters of its local model, as partially-uploading client(s), and performing, in a case where a predetermined condition is satisfied, aggregation based on partial parameters of the local model(s) received from the partially-uploading client(s), to obtain a global model in a current round of training of federated learning.

According to an aspect of the present disclosure, an electronic apparatus for a core network is provided. The electronic apparatus includes at least one processor and at least one memory including computer program code, where the at least one memory and the computer program code are configured to cause, through the at least one processor, the electronic apparatus to execute: receiving magnitude information on parameter magnitude of a global model used for federated learning, from a federated learning server to identify, from among a plurality of federated learning clients, federated learning client(s) that cannot upload all parameters of its local model, as partially-uploading client(s), for the federated learning server to perform, in a case where a predetermined condition is satisfied, aggregation based on partial parameters of the local model(s) received from the partially-uploading client(s), to obtain a global model in a current round of training of federated learning.

According to an aspect of the present disclosure, an electronic apparatus for a federated learning client is provided. The electronic apparatus includes at least one processor and at least one memory including computer program code, where the at least one memory and the computer program code are configured to cause, through the at least one processor, the electronic apparatus to execute: sending, in a case where a predetermined condition is satisfied, partial parameters of local model used for federated learning to a federated learning server, for the federated learning server to perform aggregation of local models based on the partial parameters, to obtain a global model in a current round of training of federated learning, where the federated learning server sends magnitude information on parameter magnitude of a global model to a core network, to assist the core network in identifying the electronic apparatus as a partially-uploading client that cannot upload all parameters of its local model.

According to an aspect of the present disclosure, a method for a federated learning server is provided. The method includes: sending magnitude information on parameter magnitude of a global model used for federated learning to a core network, to assist the core network in identifying, from among a plurality of federated learning clients, federated learning client(s) that cannot upload all parameters of its local model, as partially-uploading client(s), and performing, in a case where a predetermined condition is satisfied, aggregation based on partial parameters of the local model(s) received from the partially-uploading client(s), to obtain a global model in a current round of training of federated learning.

According to an aspect of the present disclosure, a method for a core network is provided. The method includes: receiving magnitude information on parameter magnitude of a global model used for federated learning, from a federated learning server to identify, from among a plurality of federated learning clients, federated learning client(s) that cannot upload all parameters of its local model, as partially-uploading client(s), for the federated learning server to perform, in a case where a predetermined condition is satisfied, aggregation based on partial parameters of the local model(s) received from the partially-uploading client(s), to obtain a global model in a current round of training of federated learning.

According to an aspect of the present disclosure, a method for a federated learning client is provided. The method includes: sending, in a case where a predetermined condition is satisfied, partial parameters of local model used for federated learning to a federated learning server, for the federated learning server to perform aggregation of local models based on the partial parameters, to obtain a global model in a current round of training of federated learning, where the federated learning server sends magnitude information on parameter magnitude of a global model to a core network, to assist the core network in identifying the federated learning client as a partially-uploading client that cannot upload all parameters of its local model.

According to other aspects of the present disclosure, computer program codes and a computer program product for implementing the above-described method and a computer-readable storage medium having the computer program codes for implementing the method stored thereon are further provided.

### BRIEF DESCRIPTION OF THE DRAWINGS

For a further illustration of the above and other advantages and features of the present disclosure, embodiments of the present disclosure are described in detail hereinafter in conjunction with accompanying drawings. The drawings, together with the detailed description below, are incorporated into and form a part of the specification. Elements having the same function and structure are denoted by same reference signs. It should be noted that the drawings illustrate merely typical embodiments of the present disclosure and should not be construed as a limitation to the scope of the present disclosure. In the drawings:
FIG. 1 illustrates a schematic diagram of federated learning in a vehicle network scenario in a conventional technology;
FIG. 2 illustrates a block diagram of functional modules of an electronic apparatus for a federated learning server according to an embodiment of the present disclosure;
FIG. 3 is a diagram illustrating an example of a neural network model;
FIG. 4 is a schematic diagram illustrating clustering with a K-Means algorithm according to an embodiment of the present disclosure;
FIG. 5 is a schematic diagram illustrating uploading of partial parameters according to an embodiment of the present disclosure;
FIG. 6 is a schematic diagram of a process of lightweight federated learning model training according to an embodiment of the present disclosure;
FIG. 7 is a schematic diagram of a process of lightweight federated learning model training according to another embodiment of the present disclosure;
FIG. 8 illustrates a block diagram of functional modules of an electronic apparatus for a core network according to another embodiment of the present disclosure;
FIG. 9 illustrates a block diagram of functional modules of an electronic apparatus for a federated learning client according to another embodiment of the present disclosure;
FIG. 10 illustrates a flow chart of a method for a federated learning server according to an embodiment of the present disclosure;
FIG. 11 illustrates a flow chart of a method for a core network according to another embodiment of the present disclosure;
FIG. 12 illustrates a flow chart of a method for a federated learning client according to a further embodiment of the present disclosure;
FIG. 13 is a block diagram illustrating a first example of a schematic configuration of an eNB or gNB to which the technology of the present disclosure is applicable;
FIG. 14 is a block diagram illustrating a second example of a schematic configuration of an eNB or gNB to which the technology of the present disclosure is applicable;
FIG. 15 is a block diagram illustrating an example of a schematic configuration of a smart phone to which the technology of the present disclosure is applicable;
FIG. 16 is a block diagram illustrating an example of a schematic configuration of an automobile navigation device to which the technology of the present disclosure is applicable; and
FIG. 17 is a block diagram of an exemplary structure of a universal personal computer in which the methods and/or apparatuses and/or systems according to the embodiments of the present disclosure is applicable.

### DETAILED DESCRIPTION

Hereinafter, exemplary embodiments of the present disclosure will be described in conjunction with the accompanying drawings. For the sake of clarity and conciseness, not all features of an actual embodiment are described in the specification. However, it is to be appreciated that numerous implementation-specific decisions shall be made while implementing any of such actual embodiments so as to achieve specific objectives of a developer, for example, to comply with system- and business-related constraining conditions which vary from one implementation to another. Furthermore, it should be understood that the development work, although may be complicated and time-consuming, is only a routine task for those skilled in the art benefiting from the present disclosure.

Here, it should be further noted that in order to avoid obscuring the present disclosure due to unnecessary details, only apparatus structures and/or processing steps closely related to the solutions according to the present disclosure are illustrated in the drawings, and other details less related to the present disclosure are omitted.

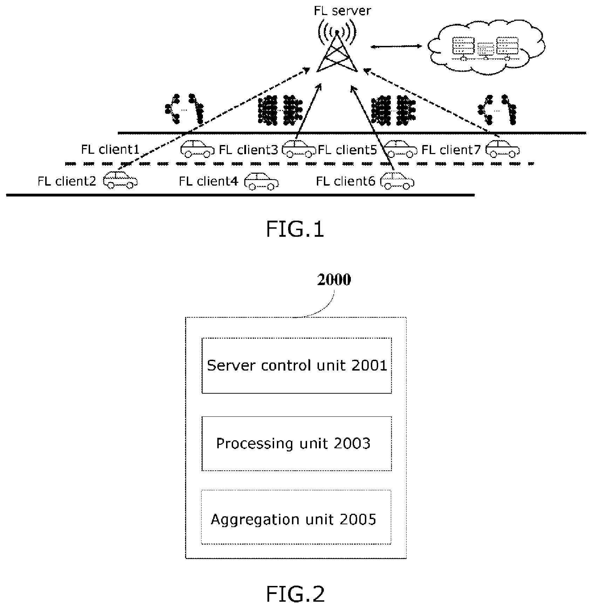

FIG. 1 illustrates a schematic diagram of federated learning in a vehicle network scenario in a conventional technology.

As shown in FIG. 1, during a FL training process, within a certain communication range, multiple FL clients (for example, FL client 1 to FL client 7 as shown in FIG. 1) locally train local models and upload the local models to a FL server. The FL server aggregates all the local models and obtains a global FL model, thereby completing training of a FL model.

In the present disclosure, the description is made with an Internet of Vehicles scenario as an example. However, the present disclosure is not limited to the Internet of Vehicles. The present disclosure is applicable to all scenarios where model training is performed through FL. In the description below, for example, in the Internet of Vehicles scenario, the FL server is deployed on a base station and has AF (application function), and the FL client is a moving vehicle (UE).

Since a FL model involves a huge volume of parameters, uploading all parameters of local models by FL clients causes increase of communication overhead. Therefore, the present disclosure proposes lightweight FL model training in which the FL client uploads only partial parameters of a local model. The lightweight FL model training is initiated by the FL server.

According to an embodiment of the present disclosure, an electronic apparatus 2000 for a federated learning server is provided. The electronic apparatus 2000 includes at least one processor and at least one memory including computer program code, where the at least one memory and the computer program code are configured to cause, through the at least one processor, the electronic apparatus 2000 to execute: sending magnitude information on parameter magnitude of a global model used for federated learning to a core network, to assist the core network in identifying, from among a plurality of federated learning clients, federated learning client(s) that cannot upload all parameters of its local model, as partially-uploading client(s), and performing, in a case where a predetermined condition is satisfied, aggregation based on partial parameters of the local model(s) received from the partially-uploading client(s), to obtain a global model in a current round of training of federated learning.

FIG. 2 illustrates a block diagram of functional modules of an electronic apparatus 2000 for a federated learning server according to an embodiment of the present disclosure.

As shown in FIG. 2, the electronic apparatus 2000 serving as a FL server includes a server control unit 2001 configured to perform control, a processing unit 2003 and an aggregation unit 2005. The processing unit 2003 may be configured to send, under the control of the server control unit 2001, magnitude information on parameter magnitude of a global model used for federated learning to a core network, to assist the core network in identifying, from among a plurality of federated learning clients, federated learning client(s) that cannot upload all parameters of its local model, as partially-uploading client(s). The aggregation unit 2005 may be configured to: under the control of the server control unit 2001, perform, in a case where a predetermined condition is satisfied, aggregation based on partial parameters of the local model(s) received from the partially-uploading client(s), to obtain a global model in a current round of training of federated learning.

The server control unit 2001 may be implemented as one or more processing circuits and at least one memory. The processing circuit may be implemented as a processor, a chip, or the like. The at least one memory may be a RAM, a ROM, or the like. The at least one memory may be configured to store computer program codes, data, and the like, required for the processing circuit to perform processing. The processing unit 2003 and the aggregation unit 2005 may operate under the control of the server control unit 2001. It should be further understood that various functional units in the electronic apparatus 2000 shown in FIG. 2 are only logical modules defined based on specific functions thereof, and are not intended to limit a specific implementation.

The electronic apparatus 2000 may, for example, be provided on a base station side or be communicatively connected to a base station. The electronic apparatus 2000 may, for example, be provided on a road side unit (RSU) or be communicatively connected to the RSU. The electronic apparatus 2000 may, for example, be provided on a mobile edge computing (MEC) side or be communicatively connected to the MEC. For example, the electronic apparatus 2000 may operate as one of the base station, the RSU, or the MEC and may further include a memory, a transceiver (not shown), and other external devices. The memory may store related data information and programs that the electronic apparatus 2000 needs to execute to achieve various functions. The transceiver may include one or more communication interfaces to support communications with different devices (such as a UE, a base station, a RSU and a MEC). An implementation of the transceiver is not specifically limited here.

The base station may be an eNB or gNB, as an example.

As an example, the core network may be, for example, a network data analysis function (NWDAF) network element.

The wireless communication system according to the present disclosure may be a 5G NR (New Radio) communication system, a 5G+ communication system, or a 6G communication system. Further, the wireless communication system according to the present disclosure may include a non-terrestrial network (NTN). Alternatively, the wireless communication system according to the present disclosure may further include a terrestrial network (TN). In addition, those skilled in the art may understand that the wireless communication system according to the present disclosure may be a 4G or 3G communication system.

For example, the partially-uploading client is a FL client that cannot upload all parameters of its local model due to poor channel quality.

For example, the plurality of federated learning clients refers to all clients participating in federated learning.

From the federated learning in a vehicle network scenario in the conventional technology shown in FIG. 1, it can be seen that the FL client uploading all its model parameters in each training iteration may cause a lot of communication overhead. In addition, in a case where a FL client cannot upload all parameters of its local model, forcing the FL client to upload all parameters of the local model makes the local model prone to a transmission error during the upload process, causing an error in the local model received by the FL server, which thereby damages precision of the global model.

According to the embodiment of the present disclosure, the electronic apparatus 2000 sends magnitude information on parameter magnitude of a global model to a core network, to assist the core network in identifying a partially-uploading client. Hence, in the process of uploading a local model, the partially-uploading client needs to upload only partial model parameters, so that the communication overhead of FL model training is reduced without affecting precision of the global model.

Hereinafter, the electronic apparatus 2000 is sometimes referred to as a FL server.

For example, in a case where the predetermined condition is satisfied, the electronic apparatus 2000 performs aggregation on partial parameters of the local model(s) uploaded by the partially-uploading client(s) and all parameters of local model(s) uploaded by non-partially-uploading client(s), to obtain a global model in a current round of training of federated learning.

For example, in a case where the predetermined condition is not satisfied, the plurality of federated learning clients upload all parameters of the local models to the electronic apparatus 2000, and the electronic apparatus 2000 performs aggregation based on all the received parameters of the local models to obtain the global model in the current round of training of federated learning.

As an example, the magnitude information (which is sometimes referred to as model parameter magnitude in the following) includes information on size of parameter(s) of the global model (which may be referred to as model size for short). Those skilled in the art may envisage other examples of the magnitude information, which are not described in detail here.

For example, an untrusted FL server sends the magnitude information to the NWDAF network element through a network exposure function (NEF) network element. A trusted FL server sends the magnitude information directly to the NWDAF network element.

As an example, the magnitude information serves as an input for UE communication analysis in NWDAF, and a UE communication predictions output of the UE communication analysis includes a list with the ID of the partially-uploading client.

For UE Communication Analytics in NWDAF, reference may be made to Section 6.7.3 of 3GPP TS23.288. For example, the magnitude information may be placed in the input of the service, and a list of FL clients that cannot upload all model parameters may be placed in the UE Communication Predictions output of the service.
For example, newly added parameters in the input may be as follows:

| Information | Source | Description |
|---|---|---|
| Model size | AF | The size of model, such as 128Mbits |

For example, newly added parameters in the output may be as follows:

| Information | Description |
|---|---|
| UE list of uploading partial model parameters | The list includes the IDs of UEs, which cannot upload all model parameters under the bad channel quality |

As an example, the predetermined condition includes that a list on the partially-uploading client(s) is received from the core network and/or precision of a global model in a previous round of training reaches preset precision, where the list includes ID(s) of the partially-uploading upload client(s); and in a case where the precision of the global model in the previous round of training reaches the preset precision, the plurality of federated learning clients serve as the partially-uploading clients.

For example, after the NWDAF network element determines that some FL clients are unable to upload all parameters of their local models due to poor channel quality and thus determines the partially-uploading clients, the NWDAF network element stores IDs of the partially-uploading clients in a list and sends the list to the FL server to assist the FL server in subsequently notifying the partially-uploading clients to upload only partial parameters.

For example, as the global model reaches the preset precision, uploading of all parameters of the local model is no longer necessary, and only the model parameter that need to be updated the most may be uploaded. As an example, those skilled in the art may preset the preset precision based on experience or application scenarios. For example, the preset precision may be 95%, 80%, or the like, which is not described in detail here.

For example, in a case where the precision of the global model in the previous round of training reaches the preset precision, the plurality of federated learning clients are all considered as the partially-uploading clients. For example, in a case where the list is empty and the precision of the global model in the previous round of training reaches the preset precision, although there is no federated learning client that cannot upload all parameters of its local model, the plurality of federated learning clients are all considered as the partially-uploading clients. In addition, in a case where the precision of the global model in the previous round of training reaches the preset precision, the partial parameters are determined in the same manner as in the case of a FL client that cannot upload all parameters of its local model due to poor channel quality. The method of determining the partial parameters is described in detail below.

From the federated learning in the vehicle network scenario in the conventional technology shown in FIG. 1, it can be seen that due to the huge volume of model parameters, uploading all parameters of local models by clients causes increase of communication overhead. Especially, in a case where channel quality of a FL clients is poor and/or the global model reaches the preset precision, uploading all local model parameters by the FL client causes further increase of communication overhead. In addition, in a case where some FL clients have poor channel quality, forcibly uploading all parameters of the local models of these FL clients makes the local models prone to transmission errors during the upload process, causing an error in the local model received by the FL server, which thereby damages precision of the global model. For example, in FIG. 1, the channel of FL Client 2 and FL Client 7 suddenly deteriorate. In this case, forcibly uploading all parameters of the local models causes an increased error of the local model received by the FL server, which thereby weakens performance of the global model.

In contrast, in an embodiment according to the present disclosure, in a case where the FL server receives a list of FL clients that cannot upload all parameters of the models, the FL server triggers lightweight FL model training (that is, the partially-uploading client uploads only partial parameters of the local model). In this way, not only communication overhead is reduced, but the error of the local model received by the FL server is reduced, so that precision of the global model is not affected. When precision of the global model of the FL server reaches the preset precision (model precision threshold), lightweight FL model training can reduce communication overhead without affecting precision of the global model.

For a situation where the precision of the global model reaches the preset precision, since the precision in each iteration in FL training is not significantly different from each other, the lightweight FL model training, that is, uploading partial parameters of the local model, may be triggered periodically; for a situation where the FL client has poor communication quality, since each iteration of FL training requires the client to upload its local model, it is necessary to predict the communication quality of the FL client in each iteration of FL training to determine whether the FL client can upload all parameters of its local model. For example, data transmission that does not occupy wireless communication resources between a 5G core network (5GC) and the FL server does not cause a large communication overhead. Therefore, lightweight FL model training may be triggered in real time in this case.

In a case where the list of FL clients returned by the NWDAF network element is empty and the precision of the current global model does not reach the preset precision, the FL server sends a notification to upload all parameters of the local model to the FL clients.

As an example, the ID of the partially-uploading client included in the list is determined by the core network based on the magnitude information and channel information between the electronic apparatus 2000 and the federated learning client obtained through prediction.

For example, the NWDAF network element has a function of predicting channel information between the FL server and the FL client (for example, a base station and a UE). The NWDAF network element determines, from the predicted information and the received magnitude information of model parameters, whether the FL client is able to upload all parameters of its local model to the FL server under the current communication situation.

As an example, the channel information includes at least one of the following: channel quality indicator (CQI), precoding matrix indicator (PMI), reference signal received power (RSRP), and signal-to-noise ratio (SNR) of a channel between the electronic apparatus 2000 and the federated learning client.

For example, the NWDAF network element calculates a transmission rate through SNR information and bandwidth information between the FL server and the FL client, and calculates the amount of data that can be uploaded within a delay limit of upload transmission for a FL local model according to the delay limit, and thereby determines whether the FL client is able to upload all parameters of its local model.
$\left\{\begin{matrix}{S}_{l} = SNR \times B \times Delay > {S}_{g} , upload all model parameters \\ {S}_{l} = SNR \times B \times Delay < {S}_{g} , upload partial model parameters\end{matrix}\right.$ Expression (1)

In expression (1), SNR represents a SNR value of a channel between the FL server and the FL client, B represents a bandwidth allocated by the FL server to the FL client, Delay represents an upper limit of upload transmission delay of a FL local model limited by the FL server, *S*₁ represents the amount of data that the FL client supports uploading, and *S*_{g} represents data amount of parameters of a FL global model. From a comparison between *S*₁ and *S*_{g}, it is determined whether the FL client is able to upload all parameters of the local model, and what proportion of model parameters the FL client can support uploading in a case of cannot uploading all the parameters of the local model. It can be seen from expression (1) that in a case where *S*₁ is greater than *S*_{g}, it is determined that the FL client can upload all parameters of its local model to the FL server under the current communication situation; and in a case where *S*₁ is less than *S*_{g}, it is determined that the FL client cannot upload all parameters of its local model to the FL server under the current communication situation.

As an example, the processing unit 2003 may be configured to: for a parameter of the global model in the previous round of training and parameters of local models uploaded by the plurality of federated learning clients in the previous round of training, calculate a local model parameter deviation degree representing a degree of dispersion between the parameters of local models of the plurality of federated learning clients, and calculate a global model parameter deviation degree representing a degree of deviation between the parameters of local models of the plurality of federated learning clients and the parameter of the global model, and determine the partial parameters based on the local model parameter deviation degree and the global model parameter deviation degree. That is, the electronic apparatus 2000 may determine parameters that need to be completed in the global model in the current round of training based on the local model parameters of the FL client received in the previous round of iteration (that is, determine the partial parameters to be uploaded by the partially-uploading client in the current round of training).

As an example, the processing unit 2003 may be configured to: calculate an average of the i-th parameter based on the i-th parameter of local models of the plurality of federated learning clients, and calculate a local model parameter deviation degree for the i-th parameter based on differences between the i-th parameter of the local model of each federated learning client and the average; and calculate a global model parameter deviation degree for the i-th parameter based on differences between the i-th parameter of the local model of each federated learning client and the i-th parameter of the global model.

For example, the FL server calculates the local model parameter deviation degree for the i-th parameter based on the i-th parameter of the local model uploaded by the FL client in a previous iteration:
${σ}_{l} = \frac{1}{N} {\sum }_{n = 1}^{N} {\left‖{p}_{n}^{l}\left(i\right)-\overline{{p}^{l}}\left(i\right)\right‖}_{2}$ Expression (2)

In expression (2), N represents the number of FL clients, ${p}_{n}^{l} \left(i\right)$ represents the i-th parameter of the n-th FL client (where n is a positive integer greater than or equal to 1 and less than or equal to N), and *p̅^̅{̅l̅}̅*(*i*) represents an average of the i-th parameter in local models of all N FL clients.

As mentioned above, σₗ measures the degree of dispersion of local model parameters of multiple FL clients. For example, the greater the degree of dispersion of all FL clients for the i-th parameter, the greater the need for further update of this parameter, that is, the greater the probability that this parameter of the local model is uploaded to the FL server.

For example, the FL server calculates the global model parameter deviation degree for the i-th parameter based on differences between the i-th parameter of the local models uploaded by FL clients in a previous iteration and the i-th parameter *p^{g}*(*i*) of the global model:
${σ}_{g} = \frac{1}{N} {\sum }_{n = 1}^{N} {\left‖{p}_{n}^{l}\left(i\right)-{p}^{g}\left(i\right)\right‖}_{2}$ Expression (3)

As mentioned above, σ_{g} measures an average difference between the local model parameters of all FL clients and the global model parameters. For example, for the i-th parameter in a model, a greater average difference between the i-th parameter in the local models of all FL clients and the i-th parameter in the global model corresponds to a greater need for further update of this parameter, that is, corresponds to a greater probability that the parameter is uploaded to the FL server.

In a case of the N FL clients include a FL client that did not upload the i-th parameter in the previous round of training, the ${p}_{n}^{l} \left(i\right)$ of the FL client that did not upload the i-th parameter is 0.

As an example, the processing unit 2003 may be configured to: cluster the parameters through a clustering method based on the local model parameter deviation degree and the global model parameter deviation degree, to obtain multiple clusters after the clustering; select, from among the multiple clusters, a selected cluster that satisfies a predetermined cluster condition; and determine parameters in the selected cluster as the partial parameters.

For example, the global model and the local model are hierarchical neural network models. Generally, for the neural network model, parameters of the neural network refer to weight values and bias values.

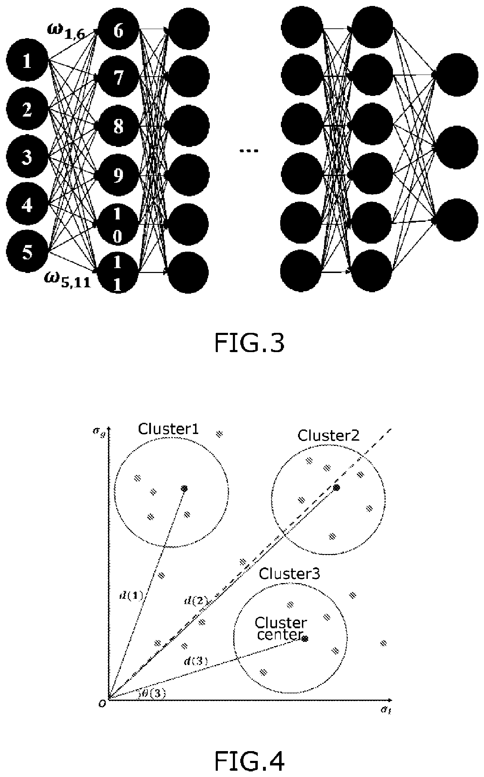

FIG. 3 is a diagram illustrating an example of a neural network model. As shown in FIG. 3, circles in the first column represent neurons in an input layer, circles in the last column represent neurons in an output layer, circles between the first column and the last column represent neurons in hidden layers, connection lines between neurons represent weight values, and each neuron has a bias value. Taking the first two layers of neurons in FIG. 3 as an example, the index of each neuron is the value in the circle (the index of the neuron may be defined in other ways, as long as each neuron is uniquely identified). For example, a weight value between neuron 1 and neuron 6 is named as ω_{1,6}, a weight value between neuron 5 and neuron 11 is named as ω_{5,11}, and weight values between two different neurons are named in a similar way. Taking the neuron with an index of 6 as an example, value of the neuron is calculated, as shown in the following expression (4):
${x}_{6} = \left({ω}_{1 , 6}{x}_{1}+{ω}_{2 , 6}{x}_{2}+{ω}_{3 , 6}{x}_{3}+{ω}_{4 , 6}{x}_{4}+{ω}_{5 , 6}{x}_{5}\right) + {b}_{6}$ Expression (4)

In expression (4), *ω* represents a weight value and b represents a bias value.

From the above description, it can be seen that there are a huge number of weights and biases in the neural network model, and calculation and clustering on the weights and biases for the local model parameter deviation degree and the global model parameter deviation degree requires a large amount of calculation. Therefore, in the present disclosure, all-1 input processing is performed on the global model and all uploaded local models on the FL server. Specifically, all input values are set to 1, for example, [1, 1, 1, 1, ...], and these values are input into the global model and all uploaded local models to obtain values of neurons in the model (the calculation process of neuron values may refer to the above expression (4) for neuron 6). Therefore, the model parameter described in the present disclosure refers to value of a neuron in the FL model.

As an example, the predetermined cluster condition includes that the probability of being selected corresponding to the cluster is greater than the predetermined probability, and the processing unit 2003 may be configured to: define a two-dimensional coordinate system with the local model parameter deviation degree and the global model parameter deviation degree as coordinates, and represent each parameter as a point in the coordinate system by determining the calculated local model parameter deviation degree and the calculated global model parameter deviation degree corresponding to the parameter as a coordinate value; cluster all points in the coordinate system by applying a K-Means algorithm to obtain multiple clusters; and for each cluster in at least a part of the multiple clusters, calculate a probability of being selected of the cluster based on a distance between a cluster center of the cluster and a coordinate origin and an included angle between a line connecting the cluster center to the coordinate origin and a dividing line of a first quadrant of the coordinate system, where the dividing line is a straight line that passes through the coordinate origin and forms a predetermined angle with a horizontal axis of the first quadrant. Here, as the distance becomes larger, the probability of being selected becomes greater, and as the included angle becomes smaller, the probability of being selected becomes greater.

For example, those skilled in the art may predetermine the predetermined probability and the predetermined angle based on experience or application scenarios.

Samples in the K-Means algorithm are defined as parameters represented by the local model parameter deviation degree and the global model parameter deviation degree (that is, points in the coordinate system). Specific steps of clustering all points in the coordinate system through the K-Means algorithm are as follows.

In step a, K points are randomly selected from the samples as cluster centers (cluster centroids).

In step b, distances between the other samples of the samples and the K cluster centers are calculated respectively, and each sample is classified into a category of a cluster center closest thereto.

In step c, an average of clustered samples in each category is calculated, and new cluster centroids are obtained.

In step d, the new cluster centroids are compared with the K cluster centroids calculated previously, the process proceeds to step b in a case where the cluster centroids change, and the process proceeds to step e where the cluster centroids have no change.

In step e, in response to the centroids no longer changing, the iteration is terminated and a clustering result is outputted.

In step f, a cluster is selected from the clustering result and parameters in the selected cluster is determined as partial parameters.

FIG. 4 is a schematic diagram illustrating clustering with a K-Means algorithm according to an embodiment of the present disclosure.

In FIG. 4, for example, a coordinate system is established with the local model parameter deviation degree σₗ as the abscissa and the global model parameter deviation degree σ_{g} as the ordinate. Since all parameters in the FL model have values of σₗ and σ_{g}, each parameter in the FL model is a point in the established coordinate system. All parameters in FL are represented in the established coordinate system, and the K-Means algorithm is applied to implement clustering of the model parameters. A clustering result is represented by circles in FIG. 4 (for illustration and not limitation, FIG. 4 shows that the clustering result includes cluster 1, cluster 2, and cluster 3), and each cluster has a cluster center.

In the following description, for simplicity, it is assumed that the predetermined angle is 45°, and therefore, the dividing line is a straight line at an angle of 45 degrees to the horizontal axis of the first quadrant.

For example, an expression for calculating the probability of being selected of a cluster is as follows:
$P \left(k\right) = \frac{exp \left(\frac{1}{2}g\left(d\left(k\right)\right)+\frac{1}{2}g\left(\left|θ\left(k\right)-45°\right|\right)\right)}{{\sum }_{j = 1}^{K} exp \left(\frac{1}{2}g\left(d\left(j\right)\right)+\frac{1}{2}g\left(\left|θ\left(j\right)-45°\right|\right)\right)}$ Expression (5)

In expression (5), K represents the total number of clusters in a clustering result (in FIG. 4, K=3, for example), k represents the k-th cluster (in FIG. 4, k is in a range from 1 to 3, for example), P(k) represents a probability that the k-th cluster is selected, and d(k) represents a distance from a cluster center of the k-th cluster to the coordinate origin o (in FIG. 4, d(1), d(2), d(3) are shown), θ(k) represents a deviation angle from a line connecting the cluster center of the k-th cluster and the coordinate origin to the x-axis (θ(3) is shown in FIG. 4), and g(·) represents a normalization function.

In an embodiment according to the present disclosure, there are two cluster selection principles. A first principle is to select a cluster whose cluster center is far away from the coordinate origin (to ensure a large comprehensive value of σₗ and σ_{g}), and therefore d(k) is considered in expression (5). A second principle is to select a cluster with which an included angle between a line connecting the cluster center of the cluster to the coordinate origin and a dividing line of the first quadrant (For example, a straight line with an angle of 45 degrees to the x-axis, as shown by the dotted line in Figure 4) of the coordinate system is small (to ensure large values of both σₗ and σ_{g}, so that there is no extreme case of leaning to one side, such as avoiding the cluster center being on the x-axis and far away from the coordinate origin). Therefore, |*θ*(*k*) - 45°| is considered in the cluster selection expression (5). By calculating the P(k) values of all clusters, clusters are selected based on the P(k) values. For example, all parameters in the cluster with the largest P(k) value may be selected as the partial parameters to be uploaded, that is, a cluster of parameters with the largest degree of deviation (where the local model parameter deviation degree σₗ and the global model parameter deviation degree σ_{g} are both as large as possible) is selected as the partial parameters that need to be completed.

The clustering is described above with the K-Means algorithm as an example. However, those skilled in the art may envisage other clustering methods, which are not described in detail here.

As an example, the processing unit 2003 may be configured to send notification information about the partial parameters to the partially-uploading clients, enabling the partially-uploading clients to upload only the partial parameters in the current round of training.

As described above, the global model is a hierarchical neural network model. As an example, the notification information includes position information of the partial parameters in the neural network model. The position information is, for example, index of a neuron as mentioned above.

As an example, the aggregation unit 2005 may be configured to: based on the position information, align partial parameters of local models received from the partially-uploading clients and all parameters of local models received from other clients among the plurality of federated learning clients, and perform aggregation of local models.

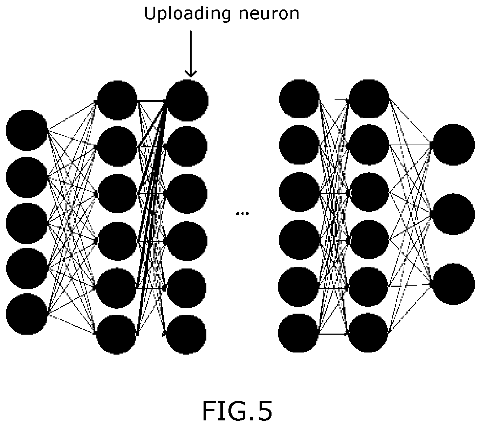

FIG. 5 is a schematic diagram illustrating uploading of partial parameters according to an embodiment of the present disclosure.

The FL client uploads partial parameters of the model after receiving the notification information of uploading partial parameters (for example, a list including indexes of neurons to perform upload). For example, FIG. 5 illustrates neurons to perform upload (referred to as an uploading neuron for short). The FL client uploads, to the FL server, weight values of connections from each neuron in an upper layer to the uploading neuron and a bias value of the uploading neuron. After receiving the local models uploaded by all FL clients, the FL server performs alignment according to the indexes of the neurons for aggregation to obtain a global model.

For a scenario where FL clients move (for example, an Internet of Vehicles scenario or a drone scenario), a FL client may leave the coverage of the FL server before completing training of a local model. It may be necessary to perform computing offloading on the leaving FL client in each round of FL training.

For example, the drone scenario may include the following two scenarios. In scenario 1, a drone serves as the FL server, and multiple vehicles serve as FL clients. In scenario 2, a base station serves as the FL server, and multiple drones, for example, performing an emergency mission, serve as FL clients.

The above problem may be solved by the electronic apparatus 2000 receiving a triggered computing offloading instruction from the core network. In the present disclosure, a computing offloading analysis function is added to the NWDAF network element in the 5G core network. That is, in each round of FL training iterations by the FL server (for example, a gNB, RSU, MEC, or drone) and the FL clients (for example, a UE or drone), the NWDAF assists in analyzing residence time of all FL clients within the coverage of the FL server to determine whether to trigger the computing offloading instruction.

As an example, the processing unit 2003 may be configured to receive, from the core network, a computing offloading instruction instructing a federated learning client to perform computing offloading, and notify all federated learning clients within the coverage of the electronic apparatus 2000 of the computing offloading instruction, so that the federated learning clients determine whether to perform computing offloading, where the computing offloading instruction is sent by the core network based on the residence time of all federated learning clients within the coverage of the electronic apparatus 2000.

For example, the residence time may be an average residence time, median residence time, or the like, of all federated learning clients within the coverage of the electronic apparatus 2000.

For example, in computation offloading, the federated learning client transmits parameters of its local model to other federated learning clients for other federated learning clients to perform federated learning based on the parameters, and the federated learning client no longer participates in federated learning. For example, the other federated learning clients perform aggregation of local models based on the parameters and parameters of their local models (for example, perform a weighted average on the parameters and parameters of their local models) to perform federated learning based on the local models after aggregation.

The other federated learning clients perform federated learning based on the local models after aggregation, so that precision of federated learning can be improved.

In FL learning, computing offloading may be referred to as model offloading. Hereinafter, computing offloading is sometimes written as model/computing offloading.

For example, the FL client ultimately determines whether to perform computing offloading based on whether the FL client has completed training of the local model.

As an example, the computing offloading instruction is sent by the core network on determining that the residence time is less than a preset training time of a local model.

For example, the preset training time of a local model may be set by those skilled in the art based on experience or an application scenario.

For example, the computing offloading instruction is not triggered in a case where the core network determines that the residence time is greater than or equal to the preset training time of a local model.

Those skilled in the art may envisage other examples of the core network sending the computing offloading instruction based on the residence time, which are not described in detail here.

As an example, the residence time is obtained by the core network based on an ID of the electronic apparatus 2000, a time ID characterizing time, and a density of federated learning clients within the coverage of the electronic apparatus 2000.

For example, the ID of the electronic apparatus 2000 may be a unique identification of the electronic apparatus 2000, and the ID of the electronic apparatus 2000 may indicate position information of the electronic apparatus 2000. For example, the ID of the electronic apparatus 2000 may be an IP address of the electronic apparatus 2000.

For example, the time ID may be a timestamp ID or a time slot ID. For example, the time ID may characterize morning peak, evening peak, or off-peak hours.

The density refers to a distribution density of the federated learning clients within the coverage of the electronic apparatus 2000.

As an example, the residence time is obtained by the core network further based on a moving speed of the federated learning client.

For example, the moving speed of the federated learning client may be an average moving speed of the federated learning client within the coverage of the electronic device 2000, or may be a list of moving speeds of all federated learning clients within the coverage of the electronic apparatus 2000.

For example, the core network may obtain a predicted average moving speed of all federated learning clients within the coverage of the electronic apparatus 2000 based on the neural network model by using the ID of the electronic apparatus 2000, the time ID characterizing time, and the density of federated learning clients within the coverage of the electronic apparatus 2000, and obtain an average residence time based on the predicted average moving speed.

For example, the neural network model for obtaining the residence time may be a long short-term memory network LSTM, or the like.

For example, an input to the computing offloading analysis function (dataset information from AF) is:

| Information | Source | Description |
|---|---|---|
| FL server (such as base station, RSU, MEC) ID | AF | IP address of FL server when in measurement |
| Time ID | AF | Parameter identifying time |
| FL clients (such as UE) density | AF | Density of FL clients |
| FL clients (such as UE) speed | AF | Average speed of FL clients or list of speeds of all FL clients |

For example, an output of the computing offloading analysis function (output analysis) is:

| Information | Description |
|---|---|
| Residence time | Indicate how long a FL client (such as a UE) remains in a certain FL server |

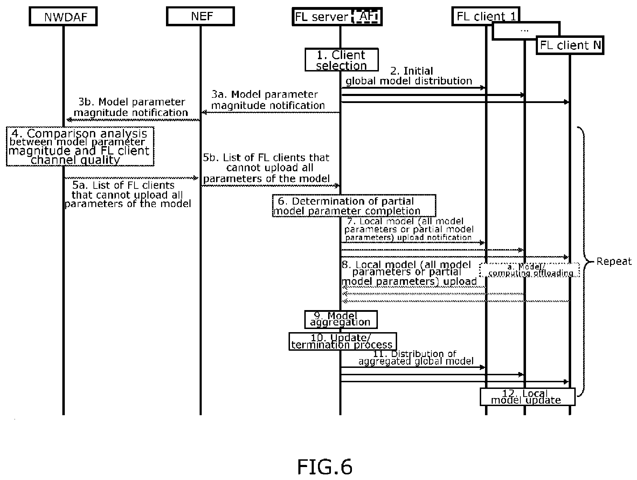

FIG. 6 is a schematic diagram of a process of lightweight FL model training according to an embodiment of the present disclosure. In FIG. 6, it is assumed that the FL server (electronic apparatus 2000) is untrusted, and the plurality of federated learning clients mentioned above include FL client 1 to FL client N.

In step 1, the FL server performs FL client selection. For example, the FL server selects, based on requirements, FL clients that need to participate in FL training. For example, values of datasets owned by FL clients are different (that is, the datasets owned by FL clients are heterogeneous), and the FL server selects a FL client based on the value of the dataset to fully train the FL model.

In step 2, the FL server performs initial global model distribution. After the FL client is selected, the FL server distributes an initial global model to the selected FL client for subsequent local model training by the FL client.

In step 3 (including steps 3a and 3b), the FL server performs model parameter magnitude notification. As shown in steps 3a and 3b, the FL server sends a model parameter magnitude notification to the NWDAF network element through the NEF network element, to assist the NWDAF network element in identifying which FL client is unable to upload all parameters of its local model under the current communication situation.

In step 4, the NWDAF network element performs a comparison analysis between model parameter magnitude and FL client channel quality, to determine whether the FL client is able to upload all parameters of its local model to the FL server under the current communication condition.

In step 5 (including steps 5a and 5b), the NWDAF network element sends a list of FL clients that cannot upload all parameters of the model to the FL server.

In step 6, the FL server performs determination of partial model parameter completion. In a case where the predetermined condition mentioned above is satisfied, the FL server determines partial parameters of the local model to be uploaded.

In step 7, the FL server performs local model (all model parameters or partial model parameters) upload notification. For example, after the FL server determines model parameters that need to be uploaded (that need to be completed), the FL server notifies the FL client which parameters are to be uploaded in the current iteration round through notification information including position information of the model parameters that need to be completed. For example, the notification information is a list that records indexes of positions of all model parameters that need to be completed. In addition, a FL client that is not notified of model parameter completion is to upload all parameters of its local model.

Alternatively, in step a, the FL client performs model/computing offloading. For description of the model/computing offloading, reference may be made to the above description of the computing offloading analysis function.

In step 8, the FL client performs local model (all model parameters or partial model parameters) upload. For example, after the FL client receives the local model (all parameters or partial parameters) upload notification, in a case where the channel quality of some FL clients is poor, the FL client with poor channel uploads corresponding model parameter in the local model according to the position information of the partial parameters that need to be uploaded, and other FL clients upload all parameters of their local models; and in a case where precision of the global model reaches a preset model precision threshold, all FL clients upload corresponding model parameters in the local models according to the position information of the partial parameters. In view of the above situation, when uploading partial parameters of local model, the FL client uploads parameter value information at the corresponding position according to the position information of the parameters.

In step 9, the FL server performs model aggregation. For example, after the FL server receives the local models uploaded by all FL clients, the FL server aligns the parameters of the local model of the clients and completes global model aggregation based on the position information and parameter value information of the parameters of the local model.

In step 10, the FL server updates/terminates the process. For example, based on the need of an aggregation task initiator, the FL server determines to continue updating or terminate the FL training process.

In step 11, the FL server performs distribution of the aggregated global model. The FL server distributes the global model aggregated in the current round of iteration to the FL client, for a next round of local model training of the FL client.

In step 12, the FL client performs local model update. After receiving a new global model, the FL client starts a new round of training and updates the local model.

In each round of training, step 4 to step 12 is iteratively executed.

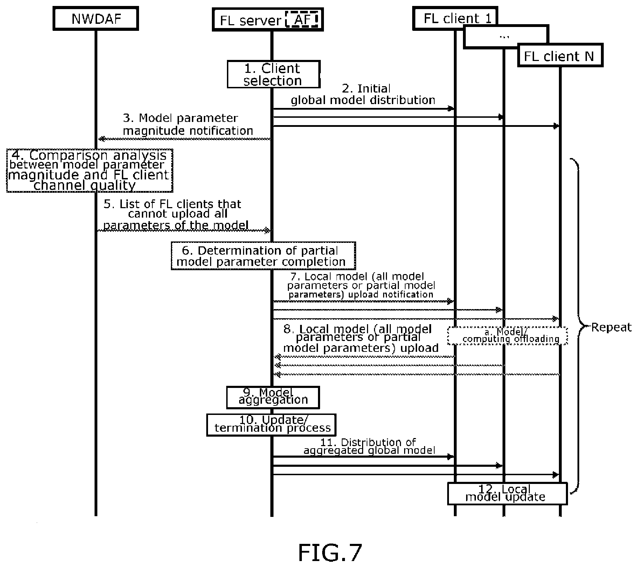

FIG. 7 is a schematic diagram of a process of lightweight FL model training according to another embodiment of the present disclosure. In FIG. 7, it is assumed that the FL server (electronic apparatus 2000) is trusted.

As mentioned above, an untrusted FL server sends the model parameter magnitude notification to the NWDAF network element through the NEF network element, while the trusted FL server sends the model parameter magnitude notification directly to the NWDAF network element. Therefore, there is no NEF network element in FIG. 7, and except for step 3 and step 5, other steps in FIG. 7 are the same as in FIG. 6 and are not repeated here.

An electronic apparatus 8000 for a core network according to another embodiment of the present disclosure is further provided in the present disclosure. The electronic apparatus 8000 includes at least one processor and at least one memory including computer program code, where the at least one memory and the computer program code are configured to cause, through the at least one processor, the electronic apparatus 8000 to execute: receiving magnitude information on parameter magnitude of a global model used for federated learning, from a federated learning server to identify, from among a plurality of federated learning clients, federated learning client(s) that cannot upload all parameters of its local model, as partially-uploading client(s), for the federated learning server to perform, in a case where a predetermined condition is satisfied, aggregation based on partial parameters of the local model(s) received from the partially-uploading client(s), to obtain a global model in a current round of training of federated learning.

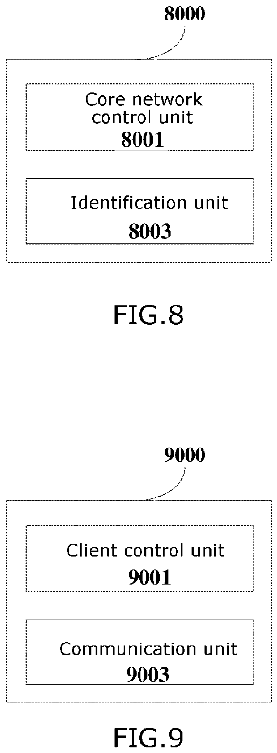

FIG. 8 illustrates a block diagram of functional modules of an electronic apparatus 8000 for a core network according to another embodiment of the present disclosure.

As shown in FIG. 8, the electronic apparatus 8000 includes a core network control unit 8001 configured to perform control and an identification unit 8003. The identification unit is configured to: under the control of the core network control unit 8001, receive magnitude information on parameter magnitude of a global model used for federated learning, from a federated learning server to identify, from among a plurality of federated learning clients, federated learning client(s) that cannot upload all parameters of its local model, as partially-uploading client(s), for the federated learning server to perform, in a case where a predetermined condition is satisfied, aggregation based on partial parameters of the local model(s) received from the partially-uploading client(s), to obtain a global model in a current round of training of federated learning.

The core network control unit 8001 may be implemented as one or more processing circuits and at least one memory. The processing circuit may be implemented as a processor, a chip, or the like. The at least one memory may be a RAM, a ROM, or the like. The at least one memory may be configured to store computer program codes, data, and the like, required for the processing circuit to perform processing. The identification unit 8003 may operate under the control of the core network control unit 8001. It should be further understood that various functional units in the electronic apparatus 8000 shown in FIG. 8 are only logical modules defined based on specific functions thereof, and are not intended to limit a specific implementation.

For example, the electronic apparatus 8000 may operate as a core network apparatus itself and may further include a memory, a transceiver (not shown), and other external devices. The memory may store related data information and programs that the electronic apparatus 8000 needs to execute to achieve various functions. The transceiver may include one or more communication interfaces to support communications with different devices (such as a UE and a base station). An implementation of the transceiver is not specifically limited here.

As an example, the federated learning server in the embodiment of the electronic apparatus 8000 may be the electronic apparatus 2000 as mentioned above. As an example, the electronic apparatus 8000 may be the core network involved in the above embodiments of the electronic apparatus 2000.

For example, the partially-uploading client is a FL client that cannot upload all parameters of its local model due to poor channel quality.

For example, the plurality of federated learning clients refers to all clients participating in federated learning.

The electronic apparatus 8000 according to the embodiment of the present disclosure is able to identify partially-uploading client(s) based on the magnitude information on parameter magnitude of a global model received from the FL server. Hence, in the process of uploading a local model, the partially-uploading client(s) need to upload only partial model parameters, so that the communication overhead of FL model training is reduced without affecting precision of the global model.

As an example, the magnitude information serves as an input for UE communication analysis in NWDAF, and a UE communication predictions output of the UE communication analysis includes a list with the ID of the partially-uploading client.

As an example, the magnitude information includes information on a size of a parameter of the global model. Those skilled in the art may envisage other examples of the magnitude information, which are not described in detail here.

For example, electronic apparatus 8000 may be an NWDAF network element. For example, an untrusted FL server sends magnitude information to the NWDAF network element through a NEF network element. A trusted FL server sends magnitude information directly to the NWDAF network element.

As an example, the predetermined condition includes that a list on the partially-uploading client(s) is received by the federated learning server from the electronic apparatus 8000 and/or precision of a global model in a previous round of training reaches preset precision, where the list includes ID(s) of the partially-uploading upload client(s).

For description of the predetermined condition, reference may be made to corresponding sections in the embodiment of the electronic apparatus 2000, which is not repeated here.

As an example, the identification unit 8003 may be configured to determine the ID of the partially-uploading client included in the list based on the magnitude information and channel information between the federated learning server and a federated learning client obtained through prediction.

For example, the electronic apparatus 8000 has a function of predicting channel information between the FL server and the FL client (for example, a base station and a UE). The electronic apparatus 8000 determines, from the predicted information and the received magnitude information of model parameters, whether the FL client is able to upload all parameters of its local model to the FL server under the current communication situation.

As an example, the channel information includes at least one of the following: channel quality indicator (CQI), precoding matrix indicator (PMI), reference signal received power (RSRP), and signal-to-noise ratio (SNR) of a channel between the electronic apparatus 8000 and the federated learning client.

For description of the electronic apparatus 8000 determining the partially-uploading client based on the magnitude information and SNR, reference may be made to the description of expression (1) in the embodiment of the electronic apparatus 2000, which is not repeated here.

As an example, the identification unit 8003 may be configured to: based on residence time of all federated learning clients within the coverage of the federated learning server, send, to the federated learning server, a computing offloading instruction instructing the federated learning client to perform computing offloading, for the federated learning server notifying all the federated learning clients within the coverage of the federated learning server of the computing offloading instruction, for the federated learning clients to determine whether to perform computing offloading.

For example, the residence time may be an average residence time, median residence time, or the like, of all federated learning clients within the coverage of the federated learning server.

As an example, the identification unit 8003 may be configured to send the computing offloading instruction on determining that the residence time is less than a preset training time of a local model.

As an example, the identification unit 8003 may be configured to obtain the residence time based on an ID of the federated learning server, a time ID characterizing time, and a density of federated learning clients within the coverage of the federated learning server.

As an example, the identification unit 8003 may be configured to obtain the residence time further based on a moving speed of the federated learning client.

For description of the model/computing offloading, reference may be made to the above description of the computing offloading analysis function in the embodiment of the electronic apparatus 2000, which is not repeated here.

An electronic apparatus 9000 for a federated learning client according to a further embodiment of the present disclosure is further provided in the present disclosure. The electronic apparatus 9000 includes at least one processor and at least one memory including computer program code, where the at least one memory and the computer program code are configured to cause, through the at least one processor, the electronic apparatus 9000 to execute: sending, in a case where a predetermined condition is satisfied, partial parameters of local model used for federated learning to a federated learning server, for the federated learning server to perform aggregation of local models based on the partial parameters, to obtain a global model in a current round of training of federated learning, where the federated learning server sends magnitude information on parameter magnitude of a global model to a core network, to assist the core network in identifying the electronic apparatus 9000 as a partially-uploading client that cannot upload all parameters of its local model.

FIG. 9 illustrates a block diagram of functional modules of an electronic apparatus 9000 for a federated learning client according to another embodiment of the present disclosure.

As shown in FIG. 9, the electronic apparatus 9000 includes a client control unit 9001 configured to perform control and a communication unit 9003. The communication unit 9003 is configured to: under the control of the client control unit 9001, in a case where a predetermined condition is satisfied, send partial parameters of local model used for federated learning to a federated learning server, for the federated learning server to perform aggregation of local models based on the partial parameters, to obtain a global model in a current round of training of federated learning, where the federated learning server sends magnitude information on parameter magnitude of a global model to a core network, to assist the core network in identifying the electronic apparatus 9000 as a partially-uploading client that cannot upload all parameters of its local model.

The client control unit 9001 may be implemented as one or more processing circuits and at least one memory. The processing circuit may be implemented as a processor, a chip, or the like. The at least one memory may be a RAM, a ROM, or the like. The at least one memory may be configured to store computer program codes, data, and the like, required for the processing circuit to perform processing. The communication unit 9003 may operate under the control of the client control unit 9001. It should be further understood that various functional units in the electronic apparatus 9000 shown in FIG. 9 are only logical modules defined based on specific functions thereof, and are not intended to limit a specific implementation.

For example, the electronic apparatus 9000 may operate as the user equipment itself and may further include a memory, a transceiver (not shown), and other external devices. The memory may store related data information and programs that the user equipment needs to execute to achieve various functions. The transceiver may include one or more communication interfaces to support communications with different devices (such as a base station, another UE, and the like). An implementation of the transceiver is not specifically limited here.

As an example, the federated learning server in the embodiment of the electronic apparatus 9000 may be the electronic apparatus 2000 as mentioned above, and the core network in the embodiment of the electronic apparatus 9000 may be the electronic apparatus 8000 as mentioned above. As an example, the electronic apparatus 9000 may be the partially-uploading clients involved in the above embodiments of the electronic apparatus 2000 and the electronic apparatus 8000.

For example, the electronic apparatus 9000 is a FL client that cannot upload all parameters of its local model due to poor channel quality.

In the process of uploading a local model, the electronic apparatus 9000 according to the embodiment of the present disclosure only needs to upload partial model parameters, so that the communication overhead of FL model training is reduced without affecting precision of the global model.

As an example, the magnitude information serves as an input for UE communication analysis in NWDAF, and a UE communication predictions output of the UE communication analysis includes a list with the ID of the partially-uploading client.

As an example, the magnitude information includes information on size of parameters of the global model. Those skilled in the art may envisage other examples of the magnitude information, which are not described in detail here.

As an example, the predetermined condition includes that a list including IDs of the partially-uploading client(s) is received by the federated learning server from the core network and/or precision of a global model in a previous round of training reaches preset precision.

For description of the predetermined condition, reference may be made to corresponding sections in the embodiment of the electronic apparatus 2000, which is not repeated here.

As an example, the communication unit 9003 may be configured to receive, from the federated learning server, notification information about the partial parameters.

As an example, the global model is a hierarchical neural network model, and the notification information includes position information of the partial parameters in the neural network model.

For description of the position information of the partial parameters in the neural network model, reference may be made to corresponding sections in the embodiment of the electronic apparatus 2000, which is not repeated here.

As an example, the communication unit 9003 may be configured to: receive, from the federated learning server, a computing offloading instruction instructing a federated learning client to perform computing offloading, to determine whether to perform computing offloading, where the computing offloading instruction is sent by the core network to the federated learning server based on residence time of all federated learning clients within the coverage of the federated learning server.

For example, the residence time may be an average residence time, median residence time, or the like, of all federated learning clients within the coverage of the federated learning server.

As an example, the computing offloading instruction is sent by the core network on determining that the residence time is less than a preset training time of a local model.

As an example, the residence time is obtained by the core network based on an ID of the federated learning server, a time ID characterizing time, and a density of federated learning clients within the coverage of the federated learning server.

As an example, the residence time is obtained by the core network further based on a moving speed of the federated learning client.

For description of the model/computing offloading, reference may be made to the above description of the computing offloading analysis function in the embodiment of the electronic apparatus 2000, which is not repeated here.

In the above description of the embodiments of the electronic apparatus 2000 and the electronic apparatus 9000, some processes or methods are further disclosed. Hereinafter, an overview of the methods is given without repeating some of details discussed above. It should be noted that although disclosed in the description of the electronic apparatuses, the methods are not necessarily implemented with the components as described or be performed by those components. For example, an embodiment of the electronic apparatus may be implemented partially or entirely using hardware and/or firmware, while a method discussed below may be implemented entirely by a computer-executable program, although the method may be implemented by the hardware and/or firmware for the electronic apparatus.

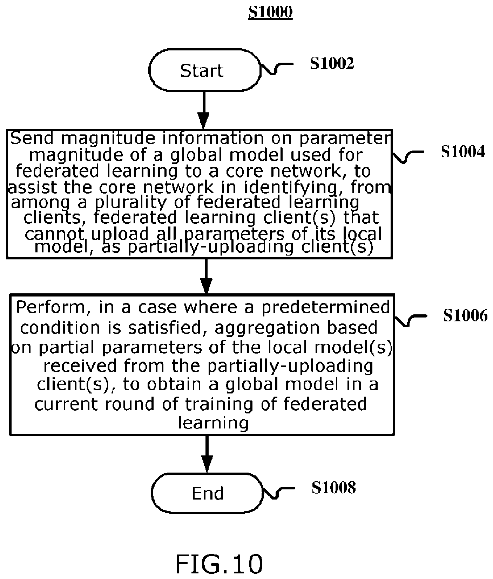

FIG. 10 illustrates a flow chart of a method S1000 for a federated learning server according to an embodiment of the present disclosure. The method S1000 starts from step S1002. In step S1004, magnitude information on parameter magnitude of a global model used for federated learning is sent to a core network, to assist the core network in identifying, from among a plurality of federated learning clients, federated learning client(s) that cannot upload all parameters of its local model, as partially-uploading client(s). In step S1006, in a case where a predetermined condition is satisfied, aggregation is performed based on partial parameters of the local model(s) received from the partially-uploading client(s), to obtain a global model in a current round of training of federated learning. The method S1000 ends at step S1008.

This method may be performed, for example, by the electronic apparatus 2000 as described above. For specific details, reference may be made to the description of relevant processes of the electronic apparatus 2000, which is not repeated here.

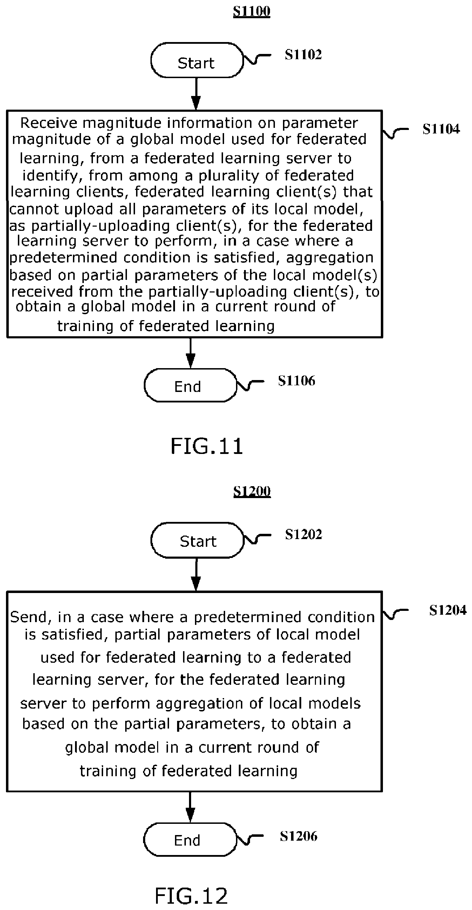

FIG. 11 illustrates a flow chart of a method S1100 for a core network according to another embodiment of the present disclosure. The method S1100 starts from step S1102. In step S1104, magnitude information on parameter magnitude of a global model used for federated learning is received from a federated learning server to identify, from among a plurality of federated learning clients, federated learning client(s) that cannot upload all parameters of its local model, as partially-uploading client(s), for the federated learning server to perform, in a case where a predetermined condition is satisfied, aggregation based on partial parameters of the local model(s) received from the partially-uploading client(s), to obtain a global model in a current round of training of federated learning. The method S1100 ends at step S1106.

This method may be performed, for example, by the electronic apparatus 8000 as described above. For specific details, reference may be made to the description of relevant processes of the electronic apparatus 8000, which is not repeated here.

FIG. 12 illustrates a flow chart of a method S1200 for a federated learning client according to a further embodiment of the present disclosure. The method S1200 starts from step S1202. In step S1204, in a case where a predetermined condition is satisfied, partial parameters of local model used for federated learning is sent to a federated learning server, for the federated learning server to perform aggregation of local models based on the partial parameters, to obtain a global model in a current round of training of federated learning, where the federated learning server sends magnitude information on parameter magnitude of a global model to a core network, to assist the core network in identifying the federated learning client as a partially-uploading client that cannot upload all parameters of its local model. The method S1200 ends at step S1206.

This method may be performed, for example, by the electronic apparatus 9000 as described above. For specific details, reference may be made to the description of relevant processes of the electronic apparatus 9000, which is not repeated here.

The technology of the present disclosure is applicable to various products.

The electronic apparatus 2000 may be provided on a base station side or be connected to a base station. The base station may be implemented as any type of evolved Node B (eNB) or gNB (5G base station). An eNB includes, for example, a macro eNB and a small eNB. The small eNB may be an eNB covering a cell smaller than a macro cell, such as a pico eNB, a micro eNB, or a home (femto) eNB. A similar situation may apply to the gNB. Alternatively, the base station may be implemented as any other type of base station, such as a NodeB or a base transceiver station (BTS). The base station may include: a body (which is also referred to as a base station device) configured to control wireless communications; and one or more remote radio heads (RRHs) arranged at a different place from the body. In addition, various types of electronic apparatuses may operate as base stations by temporarily or semi-persistently performing base station functions.

The electronic apparatus 9000 may be implemented as various user equipment. The user equipment may be implemented as a mobile terminal (such as a smart phone, a tablet personal computer (PC), a notebook PC, a portable game terminal, a portable/dongle-type mobile router, and a digital camera) or a vehicle-mounted terminal (such as an automobile navigation device). The user equipment may be implemented as a terminal that performs machine-to-machine (M2M) communications (which is also referred to as a machine type communication (MTC) terminal). Furthermore, the user equipment may be a wireless communication module (such as an integrated circuit module including a single wafer) installed on each of the above-mentioned terminals.

### [Application Examples of Base Station]

### (First Application Example)

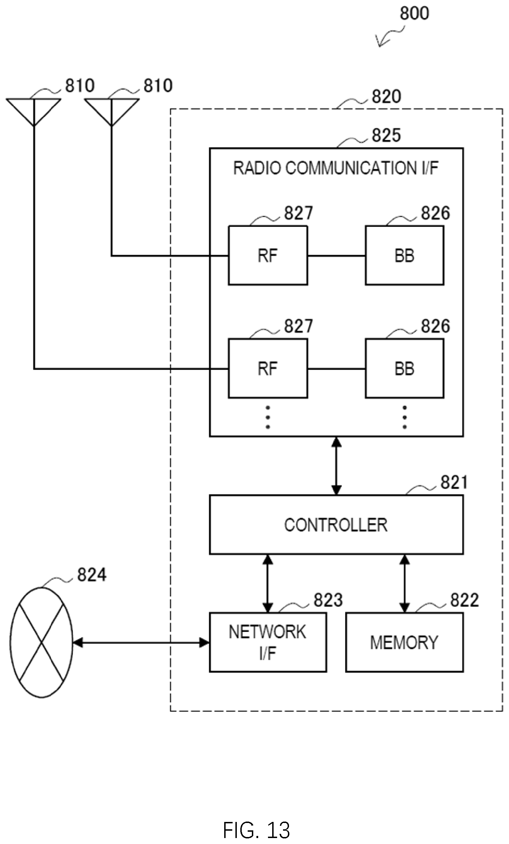

FIG. 13 is a block diagram illustrating a first example of a schematic configuration of an eNB or gNB to which the technology of the present disclosure is applicable. It should be noted that the following description is made taking an eNB as an example. The technology of the present disclosure is also applicable to a gNB. An eNB 800 includes one or more antennas 810 and a base station device 820. The base station device 820 and each of the antennas 810 may be connected to each other via a RF cable.

Each of the antennas 810 includes a single or multiple antenna elements (such as multiple antenna elements included in a multi-input multi-output (MIMO) antenna), and is used for the base station device 820 to transmit and receive radio signals. As shown in FIG. 13, the eNB 800 may include multiple antennas 810. For example, the multiple antennas 810 may be compatible with multiple frequency bands used by the eNB 800. Although FIG. 13 illustrates an example in which the eNB 800 includes multiple antennas 810, the eNB 800 may include a single antenna 810.

The base station device 820 includes a controller 821, a memory 822, a network interface 823, and a radio communication interface 825.

The controller 821 may be, for example, a CPU or a DSP, and operates various functions of a higher layer of the base station device 820. For example, the controller 821 generates a data packet based on data in a signal processed by the radio communication interface 825, and transfers the generated packet via the network interface 823. The controller 821 may bundle data from multiple baseband processors to generate a bundled packet, and transfer the generated bundled packet. The controller 821 may have logical functions of performing control such as radio resource control, radio bearer control, mobility management, admission control, and scheduling. The control may be performed in conjunction with a nearby eNB or a core network node. The memory 822 includes an RAM and an ROM, and stores a program executed by the controller 821 and various types of control data (such as a terminal list, transmission power data, and scheduling data).

The network interface 823 is a communication interface for connecting the base station device 820 to a core network 824. The controller 821 may communicate with the core network node or another eNB via the network interface 823. In this case, the eNB 800 and the core network node or another eNB may be connected to each other through a logical interface (such as an S1 interface and an X2 interface). The network interface 823 may be a wired communication interface or a radio communication interface for a wireless backhaul line. In a case that the network interface 823 is a radio communication interface, the network interface 823 may use a higher frequency band for wireless communications than a frequency band used by the radio communication interface 825.

The radio communication interface 825 supports any cellular communication scheme (such as Long-Term Evolution (LTE) and LTE-Advanced), and provides wireless connection to a terminal in a cell of the eNB 800 via the antenna 810. The radio communication interface 825 may typically include, for example, a baseband (BB) processor 826 and an RF circuit 827. The BB processor 826 may perform, for example, coding/decoding, modulation/demodulation and multiplexing/de-multiplexing, and perform various types of signal processes of layers (for example, layer 1, media access control (MAC), radio link control (RLC) and packet data convergence protocol (PDCP)). Instead of the controller 821, the BB processor 826 may have a part or all of the above-mentioned logical functions. The BB processor 826 may be a memory storing a communication control program, or a module including a processor and a related circuit configured to execute the program. Updating the program may change the functions of the BB processor 826. The module may be a card or blade inserted into a slot of the base station device 820. Alternatively, the module may be a chip mounted on a card or blade. In addition, the RF circuit 827 may include, for example, a mixer, a filter and an amplifier, and transmit and receive a radio signal via the antenna 810.

As shown in FIG. 13, the radio communication interface 825 may include multiple BB processors 826. For example, the multiple BB processors 826 may be compatible with multiple frequency bands used by the eNB 800. As shown in FIG. 13, the radio communication interface 825 may include multiple RF circuits 827. For example, the multiple RF circuits 827 may be compatible with multiple antenna elements. Although FIG. 13 illustrates an example in which the radio communication interface 825 includes multiple BB processors 826 and multiple RF circuits 827, the radio communication interface 825 may include a single BB processor 826 or a single RF circuit 827.

In a case where the electronic apparatus 2000 is implemented as the eNB 800 as shown in FIG. 13, the transceiver may be implemented by the radio communication interface 825. At least a part of the functions may be implemented by the controller 821. For example, the controller 821 may perform functions of units in the electronic apparatus 2000 to enable reduction of communication overhead of FL model training without affecting precision of the global model.

### (Second Application Example)

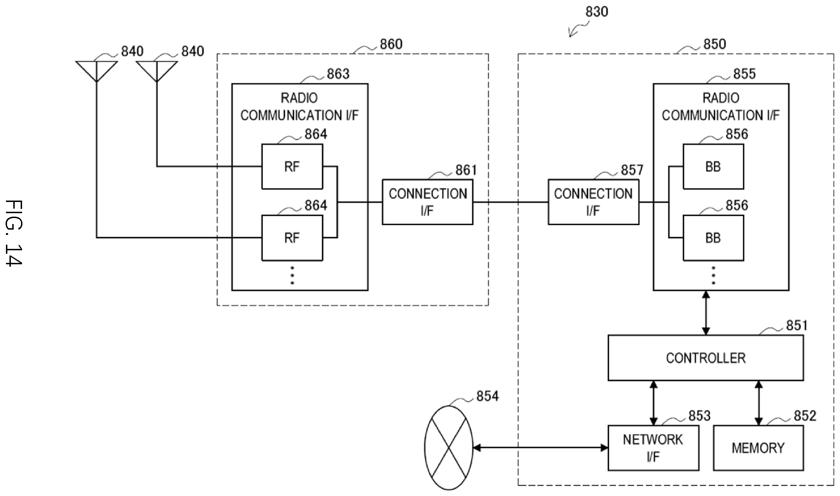

FIG. 14 is a block diagram illustrating a second example of a schematic configuration of an eNB or gNB to which the technology of the present disclosure is applicable. It should be noted that the following description is made taking the eNB as an example. The technology of the present disclosure is also applicable to the gNB. An eNB 830 includes a single or multiple antennas 840, a base station device 850 and an RRH 860. The RRH 860 and each of the antennas 840 may be connected to each other via an RF cable. The base station device 850 and the RRH 860 may be connected to each other via a high-speed line such as an optical fiber cable.

Each of the antennas 840 includes a single or multiple antenna elements (such as multiple antenna elements included in a MIMO antenna), and is used for the RRH 860 to transmit and receive a radio signal. As shown in FIG. 14, the eNB 830 may include multiple antennas 840. For example, the multiple antennas 840 may be compatible with multiple frequency bands used by the eNB 830. Although FIG. 14 illustrates an example in which the eNB 830 includes multiple antennas 840, the eNB 830 may include a single antenna 840.

The base station device 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to FIG. 14.

The radio communication interface 855 supports any cellular communication scheme (such as LTE and LTE-advanced), and provides wireless communications to a terminal located in a sector corresponding to the RRH 860 via the RRH 860 and the antenna 840. The radio communication interface 855 may typically include, for example, a BB processor 856. The BB processor 856 is the same as the BB processor 826 described with reference to FIG. 14, except that the BB processor 856 is connected to an RF circuit 864 of the RRH 860 via the connection interface 857. As shown in FIG. 14, the radio communication interface 855 may include multiple BB processors 856. For example, the multiple BB processors 856 may be compatible with multiple frequency bands used by the eNB 830. Although FIG. 14 illustrates an example in which the radio communication interface 855 includes multiple BB processors 856, the radio communication interface 855 may include a single BB processor 856.

The connection interface 857 is an interface for connecting the base station device 850 (the radio communication interface 855) to the RRH 860. The connection interface 857 may be a communication module for communication in the above-described high-speed line that connects the base station device 850 (the radio communication interface 855) to the RRH 860.

The RRH 860 includes a connection interface 861 and a radio communication interface 863.

The connection interface 861 is an interface for connecting the RRH 860 (the radio communication interface 863) to the base station device 850. The connection interface 861 may be a communication module for communication in the above-mentioned high-speed line.

The radio communication interface 863 transmits and receives radio signals via the antenna 840. The radio communication interface 863 may typically include, for example, the RF circuit 864. The RF circuit 864 may include, for example, a mixer, a filter and an amplifier, and transmit and receive radio signals via the antenna 840. As shown in FIG. 14, the radio communication interface 863 may include multiple RF circuits 864. For example, the multiple RF circuits 864 may support multiple antenna elements. Although FIG. 14 illustrates an example in which the radio communication interface 863 includes multiple RF circuits 864, the radio communication interface 863 may include a single RF circuit 864.

In a case where the electronic apparatus 2000 is implemented as the eNB 830 as shown in FIG. 14, the transceiver may be implemented by the radio communication interface 855. At least a part of the functions may be implemented by the controller 851. For example, the controller 851 may perform functions of units in the electronic apparatus 2000 to enable reduction of communication overhead of FL model training without affecting precision of the global model.

### [Application Example of User Equipment]

### (First Application Example)

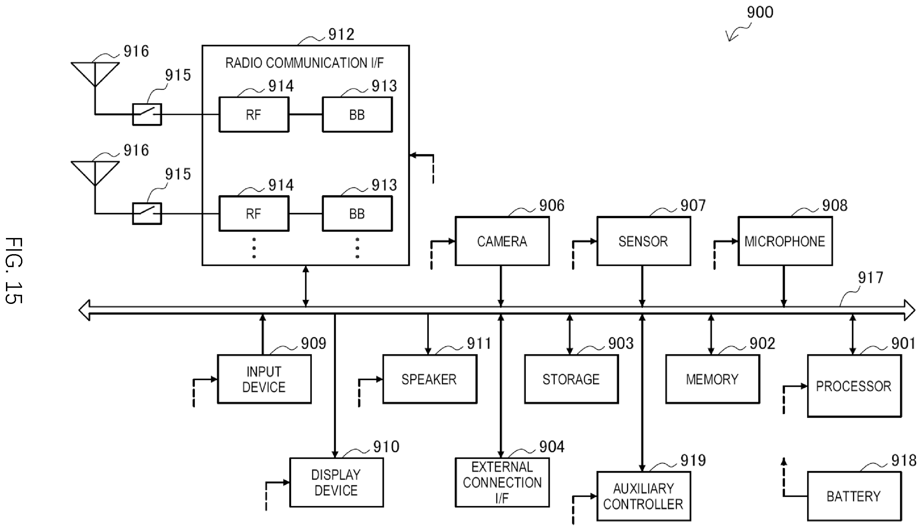

FIG. 15 is a block diagram illustrating an example of a schematic configuration of a smart phone 900 to which the technology of the present disclosure is applicable. The smart phone 900 includes a processor 901, a memory 902, a storage device 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on chip (SoC), and controls functions of the application layer and other layers of the smart phone 900. The memory 902 includes an RAM and an ROM, and stores data and programs executed by the processor 901. The storage device 903 may include a storage medium, such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyroscope sensor, a geomagnetic sensor, and an acceleration sensor. The microphone 908 converts sound inputted to the smart phone 900 into an audio signal. The input device 909 includes, for example, a touch sensor configured to detect a touch on a screen of the display device 910, a keypad, a keyboard, a button, or a switch, and receives an operation or information inputted from a user. The display device 910 includes a screen, such as a liquid crystal display (LCD) or an organic light emitting diode (OLED) display, and displays an output image of the smart phone 900. The speaker 911 converts the audio signal outputted from the smart phone 900 into sound.

The radio communication interface 912 supports any cellular communication scheme (such as LTE and LTE-Advanced), and performs wireless communications. The radio communication interface 912 may generally include, for example, a BB processor 913 and an RF circuit 914. The BB processor 913 may perform, for example, encoding/decoding, modulation/demodulation, and multiplexing/demultiplexing, and perform various types of signal processing for wireless communications. In addition, the RF circuit 914 may include, for example, a mixer, a filter and an amplifier, and transmit and receive a radio signal via the antenna 916. It should be noted that, although the figure shows a situation where one RF link is connected to one antenna, this is only illustrative, and a situation where one RF link is connected to multiple antennas through multiple phase shifters is also possible. The radio communication interface 912 may be a chip module on which the BB processor 913 and the RF circuit 914 are integrated. As shown in FIG. 15, the radio communication interface 912 may include multiple BB processors 913 and multiple RF circuits 914. Although FIG. 15 illustrates an example in which the radio communication interface 912 includes multiple BB processors 913 and multiple RF circuits 914, the radio communication interface 912 may include a single BB processor 913 or a single RF circuit 914.

In addition to the cellular communication scheme, the radio communication interface 912 may support another type of wireless communication scheme, such as a short-range wireless communication scheme, a near field communication scheme, and a wireless local area network (LAN) scheme. In this case, the radio communication interface 912 may include a BB processor 913 and an RF circuit 914 for each wireless communication scheme.

Each of the antenna switches 915 switches a connection destination of the antenna 916 among multiple circuits (for example, circuits for different wireless communication schemes) included in the radio communication interface 912.

Each of the antennas 916 includes a single or multiple antenna elements (such as multiple antenna elements included in a MIMO antenna), and is configured for the radio communication interface 912 to transmit and receive radio signals. As shown in FIG. 15, the smart phone 900 may include multiple antennas 916. Although FIG. 15 illustrates an example in which the smart phone 900 includes multiple antennas 916, the smart phone 900 may include a single antenna 916.

In addition, the smart phone 900 may include antenna(s) 916 for each wireless communication scheme. In this case, the antenna switches 915 may be omitted from the configuration of the smart phone 900.

The processor 901, the memory 902, the storage device 903, the external connection interface 904, the camera 906, the sensor 907, the microphone 908, the input device 909, the display device 910, the speaker 911, the radio communication interface 912, and the auxiliary controller 919 are connected to each other via the bus 917. The battery 918 supplies power to each block of the smart phone 900 as shown in FIG. 15 via a feeder line. The feeder line is partially shown as a dashed line in the figure. The auxiliary controller 919 operates the least necessary function of the smart phone 900 in a sleep mode, for example.

In a case where the electronic apparatuses 9000 is implemented, for example, as a smart phone on the user equipment side, such as the smart phone 900 shown in FIG. 15, the transceiver of the electronic apparatus 9000 may be implemented by the radio communication interface 912. At least part of the functions may be implemented by the processor 901 or the auxiliary controller 919. For example, the processor 901 or the auxiliary controller 919 perform functions of units in the electronic apparatus 9000 to enable reduction of communication overhead of FL model training without affecting precision of the global model.

### (Second Application Example)

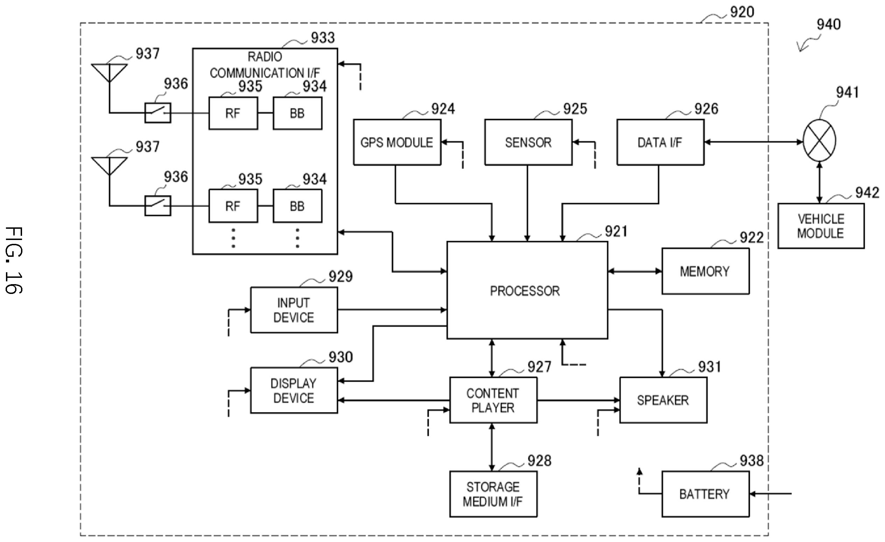

FIG. 16 is a block diagram illustrating an example of a schematic configuration of an automobile navigation device 920 to which the technology of the present disclosure is applicable. The automobile navigation device 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or SoC, and controls the navigation function and other functions of the automobile navigation device 920. The memory 922 includes an RAM and an ROM, and stores data and programs executed by the processor 921.

The GPS module 924 measures a position (such as latitude, longitude, and altitude) of the automobile navigation device 920 based on a GPS signal received from a GPS satellite. The sensor 925 may include a group of sensors, such as a gyroscope sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 reproduces content stored in a storage medium (such as a CD and a DVD) inserted into the storage medium interface 928. The input device 929 includes, for example, a touch sensor configured to detect a touch on a screen of the display device 930, a button, or a switch, and receives an operation or information inputted from a user. The display device 930 includes a screen such as an LCD or OLED display, and displays an image or reproduced content of a navigation function. The speaker 931 outputs a sound or reproduced content of the navigation function.

The radio communication interface 933 supports any cellular communication scheme (such as LTE and LTE-Advanced), and performs wireless communications. The radio communication interface 933 may generally include, for example, a BB processor 934 and an RF circuit 935. The BB processor 934 may perform, for example, encoding/decoding, modulation/demodulation, and multiplexing/demultiplexing, and perform various types of signal processing for wireless communications. In addition, the RF circuit 935 may include, for example, a mixer, a filter and an amplifier, and transmit and receive a radio signal via the antenna 937. The radio communication interface 933 may be a chip module on which the BB processor 934 and the RF circuit 935 are integrated. As shown in FIG. 16, the radio communication interface 933 may include multiple BB processors 934 and multiple RF circuits 935. Although FIG. 16 illustrates an example in which the radio communication interface 933 includes multiple BB processors 934 and multiple RF circuits 935, the radio communication interface 933 may include a single BB processor 934 or a single RF circuit 935.

In addition to the cellular communication scheme, the radio communication interface 933 may support another type of wireless communication scheme, such as a short-range wireless communication scheme, a near field communication scheme, or a wireless LAN scheme. In this case, the radio communication interface 933 may include a BB processor 934 and an RF circuit 935 for each wireless communication scheme.

Each of the antenna switches 936 switches a connection destination of the antenna 937 among multiple circuits (such as circuits for different wireless communication schemes) included in the radio communication interface 933.

Each of the antennas 937 includes a single or multiple antenna elements (such as multiple antenna elements included in a MIMO antenna), and is configured for the radio communication interface 933 to transmit and receive radio signals. As shown in FIG. 16, the automobile navigation device 920 may include multiple antennas 937. Although FIG. 16 shows an example in which the automobile navigation device 920 includes multiple antennas 937, the automobile navigation device 920 may include a single antenna 937.

In addition, the automobile navigation device 920 may include antenna(s) 937 for each wireless communication scheme. In this case, the antenna switches 936 may be omitted from the configuration of the automobile navigation device 920.

The battery 938 supplies power to blocks of the automobile navigation device 920 shown in FIG. 16 via a feeder line. The feeder line is partially shown as a dashed line in the figure. The battery 938 accumulates electric power supplied from the vehicle.

In a case where the electronic apparatuses 9000 is implemented, for example, as an automobile navigation device on the user equipment side, such as the automobile navigation device 920 shown in FIG. 16, the transceiver of the electronic apparatus 9000 may be implemented by the radio communication interface 933. At least part of the functions may be implemented by the processor 921. For example, the processor 921 performs functions of units in the electronic apparatus 9000 to enable reduction of communication overhead of FL model training without affecting precision of the global model.

The technology of the present disclosure may be implemented as an in-vehicle system (or vehicle) 940 including the automobile navigation device 920, an in-vehicle network 941, and one or more blocks of vehicle modules 942. The vehicle modules 942 generate vehicle data (such as vehicle speed, engine speed, and failure information), and outputs the generated data to the in-vehicle network 941.

Basic principles of the present disclosure are described above in conjunction with the specific embodiments. However, it should be noted that those skilled in the art can understand that all or any of steps or components of the methods and apparatuses of the present disclosure may be implemented in any computing device (including processors, storage media, and the like) or a network of computing devices in a form of hardware, firmware, software or a combination thereof. Such implementation can be realized by those skilled in the art after reading the description of the present disclosure, by utilizing basic knowledge of circuit design or basic programming skills.

Moreover, a program product storing machine-readable instruction codes is further provided according to an embodiment of the present disclosure. The instruction codes, when read and executed by a machine, may implement the method according to any of the embodiments of the present disclosure.

Accordingly, a storage medium for carrying the program product storing the machine-readable instruction codes is further included in the present disclosure. The storage medium includes, but is not limited to, a floppy disk, an optical disk, a magneto-optical disk, a storage card, and a memory stick.

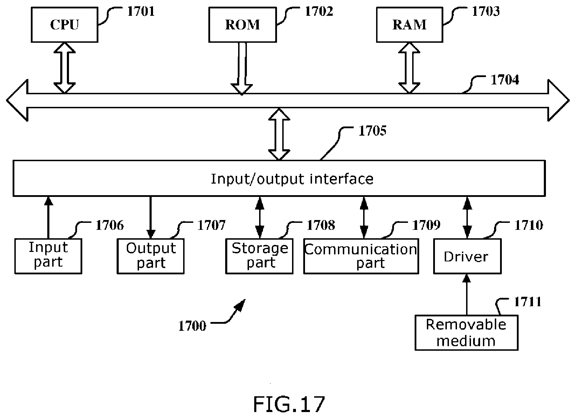

In a case of implementing the embodiments of the present disclosure in software or firmware, the program consisting the software is installed to a computer with a dedicated hardware structure (such as a general-purpose computer 1700 as shown in FIG. 17) from the storage medium or network. The computer, when installed with various programs, performs various functions.

In FIG. 17, a central processing unit (CPU) 1701 executes various processes according to a program stored in a read-only memory (ROM) 1702 or a program loaded from a storage part 1708 to a random-access memory (RAM) 1703. In the RAM 1703, data required for the CPU 1701 to perform various processes or the like is stored as necessary. The CPU 1701, the ROM 1702 and the RAM 1703 are connected to each other via a bus 1704. An input/output interface 1705 is connected to the bus 1704.

The following components are connected to the input/output interface 1705: an input part 1706 (including a keyboard, a mouse, and the like), an output part 1707 (including a display, such as a cathode ray tube (CRT) and a liquid crystal display (LCD), a loudspeaker, and the like), a storage part 1708 (including a hard disk and the like), and a communication part 1709 (including a network interface card, such as a LAN card, and a modem). The communication part 1709 performs communication processing via a network, such as the Internet. A driver 1710 may be connected to the input/output interface 1705 as needed. A removable medium 1711, such as a magnetic disk, an optical disk, a magnetic optical disk, and a semiconductor memory, is mounted to the driver 1710 as required, so that a computer program read therefrom is mounted to the storage part 1708 as required.

In a case that the above processes are implemented by software, the program consisting the software is mounted from a network, such as the Internet, or from a storage medium, such as the removable medium 1711.

Those skilled in the art should understood that the storage medium is not limited to the removable medium 1711, as shown in FIG. 17, which stores a program and is distributed separately from the device so as to provide the program to a user. Examples of the removable medium 1711 includes a magnetic disk (including a floppy disk (registered trademark)), an optical disk (including a compact disk read-only memory (CD-ROM) and a Digital Versatile Disk (DVD)), a magneto-optical disk (including a mini disk (MD) (registered trademark)), and a semiconductor memory. Alternatively, the storage medium may be the ROM 1702, the hard disk contained in the storage part 1708, or the like. The storage medium stores a program and is distributed to the user along with an apparatus in which the storage medium is incorporated.

It should be further noted that components or steps in the apparatus, method and system of the present disclosure can be decomposed and/or recombined. Such decomposition and/or recombination should be considered equivalents of the present disclosure. Furthermore, steps for executing the above processes may naturally be executed in a chronological order as described, but do not necessarily need to be executed in the chronological order. Certain steps may be performed in parallel with or independently of each other.

Finally, it should be noted that terms "include", "comprise" or any other variants thereof are intended to be non-exclusive. Therefore, a process, method, article or device including a series of elements includes not only the elements but also other elements that are not enumerated, or further includes elements inherent to the process, method, article or device. In addition, unless expressively limited otherwise, the statement "comprising (including) a(n)..." does not exclude existence of other similar elements in the process, method, article or device.

Although the embodiments of the present disclosure are described in detail above with reference to the accompanying drawings, it should be understood that the embodiments are only for illustrating the present disclosure and do not constitute a limitation to the present disclosure. For those skilled in the art, various modifications and changes can be made to the embodiments without departing from the spirit and scope of the present disclosure. Therefore, the scope of the present disclosure is limited by only the appended claims and equivalents thereof.

The present technology may be implemented as the following solutions.
Solution 1. An electronic apparatus for a federated learning server, comprising:
   at least one processor; and
   at least one memory comprising computer program code, wherein the at least one memory and the computer program code are configured to cause, through the at least one processor, the electronic apparatus to execute:
      sending magnitude information on parameter magnitude of a global model used for federated learning to a core network, to assist the core network in identifying, from among a plurality of federated learning clients, federated learning client(s) that cannot upload all parameters of its local model, as partially-uploading client(s), and
      performing, in a case where a predetermined condition is satisfied, aggregation based on partial parameters of the local model(s) received from the partially-uploading client(s), to obtain a global model in a current round of training of federated learning.
Solution 2. The electronic apparatus according to solution 1, wherein the magnitude information includes information on a size of a parameter of the global model.
Solution 3. The electronic apparatus according to solution 1 or 2, wherein
   the predetermined condition includes that a list on the partially-uploading client(s) is received from the core network and/or precision of a global model in a previous round of training reaches preset precision, wherein the list includes ID(s) of the partially-uploading upload client(s), and
   in a case where the precision of the global model in the previous round of training reaches the preset precision, the plurality of federated learning clients serves as the partially-uploading clients.
Solution 4. The electronic apparatus according to solution 3, wherein
   the ID of the partially-uploading client included in the list is determined by the core network based on the magnitude information and channel information between the electronic apparatus and federated learning client obtained through prediction.
Solution 5. The electronic apparatus according to solution 4, wherein
   the channel information comprises at least one of the following: channel quality indicator CQI, precoding matrix indicator PMI, reference signal received power RSRP, and signal-to-noise ratio SNR of a channel between the electronic apparatus and the federated learning client.
Solution 6. The electronic apparatus according to any one of solutions 1 to 5, wherein the at least one memory and the computer program code are configured to cause, through the at least one processor, the electronic apparatus to execute:
   for a parameter of the global model in the previous round of training and parameters of local models uploaded by the plurality of federated learning clients in the previous round of training,
   calculating a local model parameter deviation degree representing a degree of dispersion between the parameters of local models of the plurality of federated learning clients, and calculating a global model parameter deviation degree representing a degree of deviation between the parameters of local models of the plurality of federated learning clients and the parameter of the global model, and
   determining the partial parameters based on the local model parameter deviation degree and the global model parameter deviation degree.
Solution 7. The electronic apparatus according to solution 6, wherein the at least one memory and the computer program code are configured to cause, through the at least one processor, the electronic apparatus to execute:
   calculating an average of the i-th parameter based on the i-th parameter of local models of the plurality of federated learning clients, and calculating a local model parameter deviation degree for the i-th parameter based on differences between the i-th parameter of the local model of each federated learning client and the average; and
   calculating a global model parameter deviation degree for the i-th parameter based on differences between the i-th parameter of the local model of each federated learning client and the i-th parameter of the global model.
Solution 8. The electronic apparatus according to solution 6 or 7, wherein the at least one memory and the computer program code are configured to cause, through the at least one processor, the electronic apparatus to execute:
   clustering the parameters through a clustering method based on the local model parameter deviation degree and the global model parameter deviation degree, to obtain a plurality of clusters after the clustering,
   selecting, from among the plurality of clusters, a selected cluster that satisfies a predetermined cluster condition and
   determining parameters in the selected cluster as the partial parameters.
Solution 9. The electronic apparatus according to solution 8, wherein
   the predetermined cluster condition comprises that a probability of being selected corresponding to a cluster is greater than a predetermined probability, and
   the at least one memory and the computer program code are configured to cause, through the at least one processor, the electronic apparatus to execute:
      defining a two-dimensional coordinate system with the local model parameter deviation degree and the global model parameter deviation degree as coordinates, and representing each parameter as a point in the coordinate system by determining the calculated local model parameter deviation degree and the calculated global model parameter deviation degree corresponding to the parameter as a coordinate value,
      clustering all points in the coordinate system by applying a K-Means algorithm to obtain the plurality of clusters, and
      for each cluster in at least a part of the plurality of clusters, calculating a probability of being selected of the cluster based on a distance between a cluster center of the cluster and a coordinate origin and an included angle between a line connecting the cluster center to the coordinate origin and a dividing line of a first quadrant of the coordinate system, wherein the dividing line is a straight line that passes through the coordinate origin and forms a predetermined angle with a horizontal axis of the first quadrant,
      wherein as the distance becomes larger, the probability of being selected becomes greater, and as the included angle becomes smaller, the probability of being selected becomes greater.
Solution 10. The electronic apparatus according to any one of solutions 1 to 9, wherein the at least one memory and the computer program code are configured to cause, through the at least one processor, the electronic apparatus to execute:
   sending notification information about the partial parameters to the partially-uploading clients, enabling the partially-uploading clients to upload only the partial parameters in the current round of training.
Solution 11. The electronic apparatus according to solution 10, wherein
   the global model is a hierarchical neural network model, and
   the notification information comprises position information of the partial parameters in the neural network model.
Solution 12. The electronic apparatus according to solution 11, wherein the at least one memory and the computer program code are configured to cause, through the at least one processor, the electronic apparatus to execute:
   based on the position information, aligning partial parameters of local models received from the partially-uploading clients and all parameters of local models received from other clients among the plurality of federated learning clients, and performing aggregation of local models.
Solution 13. The electronic apparatus according to any one of solutions 1 to 12, wherein the magnitude information serves as an input for UE communication analysis in the network data analysis function NWDAF, and a UE communication predictions output of the UE communication analysis comprises a list with the ID of the partially-uploading client.
Solution 14. The electronic apparatus according to any one of solutions 1 to 13, wherein the at least one memory and the computer program code are configured to cause, through the at least one processor, the electronic apparatus to execute:
   receiving, from the core network, a computing offloading instruction instructing a federated learning client to perform computing offloading, and
   notifying all federated learning clients within the coverage of the electronic apparatus of the computing offloading instruction, for the federated learning clients to determine whether to perform computing offloading,
   wherein the computing offloading instruction is sent by the core network based on residence time of all federated learning clients within the coverage of the electronic apparatus.
Solution 15. The electronic apparatus according to solution 14, wherein
   the computing offloading instruction is sent by the core network on determining that the residence time is less than a preset training time of a local model.
Solution 16. The electronic apparatus according to solution 14 or 15, wherein
   the residence time is obtained by the core network based on an ID of the electronic apparatus, a time ID characterizing time, and a density of federated learning clients within the coverage of the electronic apparatus.
Solution 17. The electronic apparatus according to solution 16, wherein
   the residence time is obtained by the core network further based on a moving speed of the federated learning client.
Solution 18. An electronic apparatus for a core network, comprising:
   at least one processor; and
   at least one memory comprising computer program code, wherein the at least one memory and the computer program code are configured to cause, through the at least one processor, the electronic apparatus to execute:
      receiving magnitude information on parameter magnitude of a global model used for federated learning, from a federated learning server to identify, from among a plurality of federated learning clients, federated learning client(s) that cannot upload all parameters of its local model, as partially-uploading client(s), for the federated learning server to perform, in a case where a predetermined condition is satisfied, aggregation based on partial parameters of the local model(s) received from the partially-uploading client(s), to obtain a global model in a current round of training of federated learning.
Solution 19. The electronic apparatus according to solution 18, wherein the magnitude information includes information on a size of a parameter of the global model.
Solution 20. The electronic apparatus according to solution 18 or 19, wherein
   the predetermined condition includes that a list on the partially-uploading client(s) is received by the federated learning server from the electronic apparatus and/or precision of a global model in a previous round of training reaches preset precision, wherein the list includes ID(s) of the partially-uploading upload client(s).
Solution 21. The electronic apparatus according to solution 20, wherein the at least one memory and the computer program code are configured to cause, through the at least one processor, the electronic apparatus to execute:
   determining the ID of the partially-uploading client included in the list based on the magnitude information and channel information between the federated learning server and a federated learning client obtained through prediction.
Solution 22. The electronic apparatus according to solution 21, wherein
   the channel information comprises at least one of the following: channel quality indicator CQI, precoding matrix indicator PMI, reference signal received power RSRP, and signal-to-noise ratio SNR of a channel between the federated learning server and the federated learning client.
Solution 23. The electronic apparatus according to any one of solutions 18 to 22, wherein the magnitude information serves as an input for UE communication analysis in the network data analysis function NWDAF, and a UE communication predictions output of the UE communication analysis comprises a list with the ID of the partially-uploading client.
Solution 24. The electronic apparatus according to any one of solutions 18 to 23, wherein the at least one memory and the computer program code are configured to cause, through the at least one processor, the electronic apparatus to execute:
   based on residence time of all federated learning clients within the coverage of the federated learning server, sending, to the federated learning server, a computing offloading instruction instructing the federated learning client to perform computing offloading, for the federated learning server notifying all the federated learning clients within the coverage of the federated learning server of the computing offloading instruction, for the federated learning clients to determine whether to perform computing offloading.
Solution 25. The electronic apparatus according to solution 24, wherein the at least one memory and the computer program code are configured to cause, through the at least one processor, the electronic apparatus to execute:
   sending the computing offloading instruction on determining that the residence time is less than a preset training time of a local model.
Solution 26. The electronic apparatus according to solution 24 or 25, wherein the at least one memory and the computer program code are configured to cause, through the at least one processor, the electronic apparatus to execute:
   obtaining the residence time based on an ID of the federated learning server, a time ID characterizing time, and a density of federated learning clients within the coverage of the federated learning server.
Solution 27. The electronic apparatus according to solution 26, wherein the at least one memory and the computer program code are configured to cause, through the at least one processor, the electronic apparatus to execute:
   obtaining the residence time further based on a moving speed of the federated learning client.
Solution 28. An electronic apparatus for a federated learning client, comprising:
   at least one processor; and
   at least one memory comprising computer program code, wherein the at least one memory and the computer program code are configured to cause, through the at least one processor, the electronic apparatus to execute:
      sending, in a case where a predetermined condition is satisfied, partial parameters of local model used for federated learning to a federated learning server, for the federated learning server to perform aggregation of local models based on the partial parameters, to obtain a global model in a current round of training of federated learning,
      wherein the federated learning server sends magnitude information on parameter magnitude of a global model to a core network, to assist the core network in identifying the electronic apparatus as a partially-uploading client that cannot upload all parameters of its local model.
Solution 29. The electronic apparatus according to solution 28, wherein the magnitude information includes information on a size of a parameter of the global model.
Solution 30. The electronic apparatus according to solution 28 or 29, wherein
   the predetermined condition includes that a list including IDs of the partially-uploading client(s) is received by the federated learning server from the core network and/or precision of a global model in a previous round of training reaches preset precision.
Solution 31. The electronic apparatus according to any one of solutions 28 to 30, wherein the at least one memory and the computer program code are configured to cause, through the at least one processor, the electronic apparatus to execute:
   receiving, from the federated learning server, notification information about the partial parameters.
Solution 32. The electronic apparatus according to solution 31, wherein
   the global model is a hierarchical neural network model, and
   the notification information comprises position information of the partial parameters in the neural network model.
Solution 33. The electronic apparatus according to any one of solutions 28 to 32, wherein the magnitude information serves as an input for UE communication analysis in the network data analysis function NWDAF, and a UE communication predictions output of the UE communication analysis comprises a list with the ID of the partially-uploading client.
Solution 34. The electronic apparatus according to any one of solutions 28 to 33, wherein the at least one memory and the computer program code are configured to cause, through the at least one processor, the electronic apparatus to execute:
   receiving, from the federated learning server, a computing offloading instruction instructing a federated learning client to perform computing offloading, to determine whether to perform the computing offloading,
   wherein the computing offloading instruction is sent by the core network to the federated learning server based on residence time of all federated learning clients within the coverage of the federated learning server.
Solution 35. The electronic apparatus according to solution 34, wherein
   the computing offloading instruction is sent by the core network on determining that the residence time is less than a preset training time of a local model.
Solution 36. The electronic apparatus according to solution 34 or 35, wherein
   the residence time is obtained by the core network based on an ID of the federated learning server, a time ID characterizing time, and a density of federated learning clients within the coverage of the federated learning server.
Solution 37. The electronic apparatus according to solution 36, wherein
   the residence time is obtained by the core network further based on a moving speed of the federated learning client.
Solution 38. A method for a federated learning server, comprising:
   sending magnitude information on parameter magnitude of a global model used for federated learning to a core network, to assist the core network in identifying, from among a plurality of federated learning clients, federated learning client(s) that cannot upload all parameters of its local model, as partially-uploading client(s), and
   performing, in a case where a predetermined condition is satisfied, aggregation based on partial parameters of the local model(s) received from the partially-uploading client(s), to obtain a global model in a current round of training of federated learning.
Solution 39. A method for a core network, comprising:
   receiving magnitude information on parameter magnitude of a global model used for federated learning, from a federated learning server to identify, from among a plurality of federated learning clients, federated learning client(s) that cannot upload all parameters of its local model, as partially-uploading client(s), for the federated learning server to perform, in a case where a predetermined condition is satisfied, aggregation based on partial parameters of the local model(s) received from the partially-uploading client(s), to obtain a global model in a current round of training of federated learning.
Solution 40. A method for a federated learning client, comprising:
   sending, in a case where a predetermined condition is satisfied, partial parameters of local model used for federated learning to a federated learning server, for the federated learning server to perform aggregation of local models based on the partial parameters, to obtain a global model in a current round of training of federated learning,
   wherein the federated learning server sends magnitude information on parameter magnitude of a global model to a core network, to assist the core network in identifying the federated learning client as a partially-uploading client that cannot upload all parameters of its local model.
Solution 41. A computer readable storage medium storing computer executable instructions that, when executed by a computer, execute the method according to any one of solutions 38 to 40.

## Claims

1. An electronic apparatus for a federated learning server, comprising:
at least one processor; and
at least one memory comprising computer program code, wherein the at least one memory and the computer program code are configured to cause, through the at least one processor, the electronic apparatus to execute:
sending magnitude information on parameter magnitude of a global model used for federated learning to a core network, to assist the core network in identifying, from among a plurality of federated learning clients, federated learning client(s) that cannot upload all parameters of its local model, as partially-uploading client(s), and
performing, in a case where a predetermined condition is satisfied, aggregation based on partial parameters of the local model(s) received from the partially-uploading client(s), to obtain a global model in a current round of training of federated learning.

2. The electronic apparatus according to claim 1, wherein the magnitude information includes information on a size of a parameter of the global model.

3. The electronic apparatus according to claim 1 or 2, wherein
the predetermined condition includes that a list on the partially-uploading client(s) is received from the core network and/or precision of a global model in a previous round of training reaches preset precision, wherein the list includes ID(s) of the partially-uploading upload client(s), and
in a case where the precision of the global model in the previous round of training reaches the preset precision, the plurality of federated learning clients serves as the partially-uploading clients.

4. The electronic apparatus according to claim 3, wherein
the ID of the partially-uploading client included in the list is determined by the core network based on the magnitude information and channel information between the electronic apparatus and federated learning client obtained through prediction.

5. The electronic apparatus according to claim 4, wherein
the channel information comprises at least one of the following: channel quality indicator CQI, precoding matrix indicator PMI, reference signal received power RSRP, and signal-to-noise ratio SNR of a channel between the electronic apparatus and the federated learning client.

6. The electronic apparatus according to any one of claims 1 to 5, wherein the at least one memory and the computer program code are configured to cause, through the at least one processor, the electronic apparatus to execute:
for a parameter of the global model in the previous round of training and parameters of local models uploaded by the plurality of federated learning clients in the previous round of training,
calculating a local model parameter deviation degree representing a degree of dispersion between the parameters of local models of the plurality of federated learning clients, and calculating a global model parameter deviation degree representing a degree of deviation between the parameters of local models of the plurality of federated learning clients and the parameter of the global model, and
determining the partial parameters based on the local model parameter deviation degree and the global model parameter deviation degree.

7. The electronic apparatus according to claim 6, wherein the at least one memory and the computer program code are configured to cause, through the at least one processor, the electronic apparatus to execute:
calculating an average of the i-th parameter based on the i-th parameter of local models of the plurality of federated learning clients, and calculating a local model parameter deviation degree for the i-th parameter based on differences between the i-th parameter of the local model of each federated learning client and the average; and
calculating a global model parameter deviation degree for the i-th parameter based on differences between the i-th parameter of the local model of each federated learning client and the i-th parameter of the global model.

8. The electronic apparatus according to claim 6 or 7, wherein the at least one memory and the computer program code are configured to cause, through the at least one processor, the electronic apparatus to execute:
clustering the parameters through a clustering method based on the local model parameter deviation degree and the global model parameter deviation degree, to obtain a plurality of clusters after the clustering,
selecting, from among the plurality of clusters, a selected cluster that satisfies a predetermined cluster condition and
determining parameters in the selected cluster as the partial parameters.

9. The electronic apparatus according to claim 8, wherein
the predetermined cluster condition comprises that a probability of being selected corresponding to a cluster is greater than a predetermined probability, and
the at least one memory and the computer program code are configured to cause, through the at least one processor, the electronic apparatus to execute:
defining a two-dimensional coordinate system with the local model parameter deviation degree and the global model parameter deviation degree as coordinates, and representing each parameter as a point in the coordinate system by determining the calculated local model parameter deviation degree and the calculated global model parameter deviation degree corresponding to the parameter as a coordinate value,
clustering all points in the coordinate system by applying a K-Means algorithm to obtain the plurality of clusters, and
for each cluster in at least a part of the plurality of clusters, calculating a probability of being selected of the cluster based on a distance between a cluster center of the cluster and a coordinate origin and an included angle between a line connecting the cluster center to the coordinate origin and a dividing line of a first quadrant of the coordinate system, wherein the dividing line is a straight line that passes through the coordinate origin and forms a predetermined angle with a horizontal axis of the first quadrant,
wherein as the distance becomes larger, the probability of being selected becomes greater, and as the included angle becomes smaller, the probability of being selected becomes greater.

10. The electronic apparatus according to any one of claims 1 to 9, wherein the at least one memory and the computer program code are configured to cause, through the at least one processor, the electronic apparatus to execute:
sending notification information about the partial parameters to the partially-uploading clients, enabling the partially-uploading clients to upload only the partial parameters in the current round of training.

11. The electronic apparatus according to claim 10, wherein
the global model is a hierarchical neural network model, and
the notification information comprises position information of the partial parameters in the neural network model.

12. The electronic apparatus according to claim 11, wherein the at least one memory and the computer program code are configured to cause, through the at least one processor, the electronic apparatus to execute:
based on the position information, aligning partial parameters of local models received from the partially-uploading clients and all parameters of local models received from other clients among the plurality of federated learning clients, and performing aggregation of local models.

13. The electronic apparatus according to any one of claims 1 to 12, wherein the magnitude information serves as an input for UE communication analysis in the network data analysis function NWDAF, and a UE communication predictions output of the UE communication analysis comprises a list with the ID of the partially-uploading client.

14. The electronic apparatus according to any one of claims 1 to 13, wherein the at least one memory and the computer program code are configured to cause, through the at least one processor, the electronic apparatus to execute:
receiving, from the core network, a computing offloading instruction instructing a federated learning client to perform computing offloading, and
notifying all federated learning clients within the coverage of the electronic apparatus of the computing offloading instruction, for the federated learning clients to determine whether to perform computing offloading,
wherein the computing offloading instruction is sent by the core network based on residence time of all federated learning clients within the coverage of the electronic apparatus.

15. The electronic apparatus according to claim 14, wherein
the computing offloading instruction is sent by the core network on determining that the residence time is less than a preset training time of a local model.

16. The electronic apparatus according to claim 14 or 15, wherein
the residence time is obtained by the core network based on an ID of the electronic apparatus, a time ID characterizing time, and a density of federated learning clients within the coverage of the electronic apparatus.

17. The electronic apparatus according to claim 16, wherein
the residence time is obtained by the core network further based on a moving speed of the federated learning client.

18. An electronic apparatus for a core network, comprising:
at least one processor; and
at least one memory comprising computer program code, wherein the at least one memory and the computer program code are configured to cause, through the at least one processor, the electronic apparatus to execute:
receiving magnitude information on parameter magnitude of a global model used for federated learning, from a federated learning server to identify, from among a plurality of federated learning clients, federated learning client(s) that cannot upload all parameters of its local model, as partially-uploading client(s), for the federated learning server to perform, in a case where a predetermined condition is satisfied, aggregation based on partial parameters of the local model(s) received from the partially-uploading client(s), to obtain a global model in a current round of training of federated learning.

19. The electronic apparatus according to claim 18, wherein the magnitude information includes information on a size of a parameter of the global model.

20. The electronic apparatus according to claim 18 or 19, wherein
the predetermined condition includes that a list on the partially-uploading client(s) is received by the federated learning server from the electronic apparatus and/or precision of a global model in a previous round of training reaches preset precision, wherein the list includes ID(s) of the partially-uploading upload client(s).

21. The electronic apparatus according to claim 20, wherein the at least one memory and the computer program code are configured to cause, through the at least one processor, the electronic apparatus to execute:
determining the ID of the partially-uploading client included in the list based on the magnitude information and channel information between the federated learning server and a federated learning client obtained through prediction.

22. The electronic apparatus according to claim 21, wherein
the channel information comprises at least one of the following: channel quality indicator CQI, precoding matrix indicator PMI, reference signal received power RSRP, and signal-to-noise ratio SNR of a channel between the federated learning server and the federated learning client.

23. The electronic apparatus according to any one of claims 18 to 22, wherein the magnitude information serves as an input for UE communication analysis in the network data analysis function NWDAF, and a UE communication predictions output of the UE communication analysis comprises a list with the ID of the partially-uploading client.

24. The electronic apparatus according to any one of claims 18 to 23, wherein the at least one memory and the computer program code are configured to cause, through the at least one processor, the electronic apparatus to execute:
based on residence time of all federated learning clients within the coverage of the federated learning server, sending, to the federated learning server, a computing offloading instruction instructing the federated learning client to perform computing offloading, for the federated learning server notifying all the federated learning clients within the coverage of the federated learning server of the computing offloading instruction, for the federated learning clients to determine whether to perform computing offloading.

25. The electronic apparatus according to claim 24, wherein the at least one memory and the computer program code are configured to cause, through the at least one processor, the electronic apparatus to execute:
sending the computing offloading instruction on determining that the residence time is less than a preset training time of a local model.

26. The electronic apparatus according to claim 24 or 25, wherein the at least one memory and the computer program code are configured to cause, through the at least one processor, the electronic apparatus to execute:
obtaining the residence time based on an ID of the federated learning server, a time ID characterizing time, and a density of federated learning clients within the coverage of the federated learning server.

27. The electronic apparatus according to claim 26, wherein the at least one memory and the computer program code are configured to cause, through the at least one processor, the electronic apparatus to execute:
obtaining the residence time further based on a moving speed of the federated learning client.

28. An electronic apparatus for a federated learning client, comprising:
at least one processor; and
at least one memory comprising computer program code, wherein the at least one memory and the computer program code are configured to cause, through the at least one processor, the electronic apparatus to execute:
sending, in a case where a predetermined condition is satisfied, partial parameters of local model used for federated learning to a federated learning server, for the federated learning server to perform aggregation of local models based on the partial parameters, to obtain a global model in a current round of training of federated learning,
wherein the federated learning server sends magnitude information on parameter magnitude of a global model to a core network, to assist the core network in identifying the electronic apparatus as a partially-uploading client that cannot upload all parameters of its local model.

29. The electronic apparatus according to claim 28, wherein the magnitude information includes information on a size of a parameter of the global model.

30. The electronic apparatus according to claim 28 or 29, wherein
the predetermined condition includes that a list including IDs of the partially-uploading client(s) is received by the federated learning server from the core network and/or precision of a global model in a previous round of training reaches preset precision.

31. The electronic apparatus according to any one of claims 28 to 30, wherein the at least one memory and the computer program code are configured to cause, through the at least one processor, the electronic apparatus to execute:
receiving, from the federated learning server, notification information about the partial parameters.

32. The electronic apparatus according to claim 31, wherein
the global model is a hierarchical neural network model, and
the notification information comprises position information of the partial parameters in the neural network model.

33. The electronic apparatus according to any one of claims 28 to 32, wherein the magnitude information serves as an input for UE communication analysis in the network data analysis function NWDAF, and a UE communication predictions output of the UE communication analysis comprises a list with the ID of the partially-uploading client.

34. The electronic apparatus according to any one of claims 28 to 33, wherein the at least one memory and the computer program code are configured to cause, through the at least one processor, the electronic apparatus to execute:
receiving, from the federated learning server, a computing offloading instruction instructing a federated learning client to perform computing offloading, to determine whether to perform the computing offloading,
wherein the computing offloading instruction is sent by the core network to the federated learning server based on residence time of all federated learning clients within the coverage of the federated learning server.

35. The electronic apparatus according to claim 34, wherein
the computing offloading instruction is sent by the core network on determining that the residence time is less than a preset training time of a local model.

36. The electronic apparatus according to claim 34 or 35, wherein
the residence time is obtained by the core network based on an ID of the federated learning server, a time ID characterizing time, and a density of federated learning clients within the coverage of the federated learning server.

37. The electronic apparatus according to claim 36, wherein
the residence time is obtained by the core network further based on a moving speed of the federated learning client.

38. A method for a federated learning server, comprising:
sending magnitude information on parameter magnitude of a global model used for federated learning to a core network, to assist the core network in identifying, from among a plurality of federated learning clients, federated learning client(s) that cannot upload all parameters of its local model, as partially-uploading client(s), and
performing, in a case where a predetermined condition is satisfied, aggregation based on partial parameters of the local model(s) received from the partially-uploading client(s), to obtain a global model in a current round of training of federated learning.

39. A method for a core network, comprising:
receiving magnitude information on parameter magnitude of a global model used for federated learning, from a federated learning server to identify, from among a plurality of federated learning clients, federated learning client(s) that cannot upload all parameters of its local model, as partially-uploading client(s), for the federated learning server to perform, in a case where a predetermined condition is satisfied, aggregation based on partial parameters of the local model(s) received from the partially-uploading client(s), to obtain a global model in a current round of training of federated learning.

40. A method for a federated learning client, comprising:
sending, in a case where a predetermined condition is satisfied, partial parameters of local model used for federated learning to a federated learning server, for the federated learning server to perform aggregation of local models based on the partial parameters, to obtain a global model in a current round of training of federated learning,
wherein the federated learning server sends magnitude information on parameter magnitude of a global model to a core network, to assist the core network in identifying the federated learning client as a partially-uploading client that cannot upload all parameters of its local model.

41. A computer readable storage medium storing computer executable instructions that, when executed by a computer, execute the method according to any one of claims 38 to 40.
